# EUROPEAN PATENT APPLICATION

(11) **EP 4 456 652 A1**
(43) Date of publication of application: **30.10.2024**
(21) Application number: 24172835.1
(22) Date of filing: 26.04.2024
(51) Int. Cl.: H04W 74/0816

(54) **PRE-EMPTIVE PROTECTION OF PRE-EMPTING DATA FRAME**

(30) Priority: 27.04.2023 US 202363462266 P
(71) Applicant: Comcast Cable Communications, LLC, Philadelphia, PA 19103 (US)
(72) Inventor: LANANTE, Leonardo Alisasis, Philadelphia, 19103 (US); KIM, Jeongki, Philadelphia, 19103 (US); DINAN, Esmael Hejazi, Philadelphia, 19103 (US)
(74) Representative: V.O.

(57) **Abstract**

An access point may communicate with one or more computing devices. A data unit may be divided into smaller data units for transmission. One or more smaller data units may be replaced by another data unit, which may have a higher priority. After the access point sends the higher priority data unit to a computing device, transmission of the remaining data units may resume.

## Description

### CROSS-REFERENCE TO RELATED APPLICATIONS

This application claims the benefit of U.S. Provisional Application No. 63/462,266, filed on April 27, 2023. The above referenced application is hereby incorporated by reference in its entirety.

### BACKGROUND

An access point communicates with computing devices, such as stations. Data units are communicated between the access point and stations.

### SUMMARY

The following summary presents a simplified summary of certain features. The summary is not an extensive overview and is not intended to identify key or critical elements.

An access point may communicate with one or more computing devices, such as stations. At least some data (e.g., data requiring lower latency) may be prioritized for transmission to a computing device, such as a station. For example, the access point may send a frame to both a first computing device and a second computing device. The frame may request a first response from the first computing device, to which downlink data may be initially scheduled, and a second response from the second computing device, which may expect to receive higher priority data (e.g., data requiring lower latency). If the higher priority data may become available for the second computing device while data is being transmitted to the first computing device, the access point may suspend the ongoing transmission to the first computing device and promptly send the higher priority data to the second computing device, based on receiving the second response. This method may help reduce a likelihood of potential delays for higher priority data.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows example devices in a communication network.
FIG. 3 shows an example format of a Medium Access Control (MAC) frame.
FIG. 4 shows an example trigger frame.
FIG. 5 shows an example common info field.
FIG. 6 shows an example Request-to-Send (RTS)/Clear-to-Send (CTS) method.
FIG. 7 shows an example multi-user Request-to-Send (MU-RTS)/Clear-to-Send (CTS) method.
FIG. 8 shows an example MU-RTS trigger frame.
FIG. 9 shows an example downlink pre-emption.
FIG. 10 shows an example uplink pre-emption.
FIG. 11 shows an example problem of downlink pre-emption.
FIG. 12 shows an example pre-emptive protection of pre-empting data.
FIG. 13 shows an example pre-emptive protection of pre-empting data.
FIG. 14 shows an example request-response procedure that may be used to request pre-emptive protection of pre-empting traffic.
FIG. 15 shows an example MU-RTS trigger frame.
FIG. 16 shows an example pre-emptive protection method.
FIG. 17 shows an example multi-user Request-to-Send (MU-RTS)/Clear-to-Send (CTS) method.
FIG. 18 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

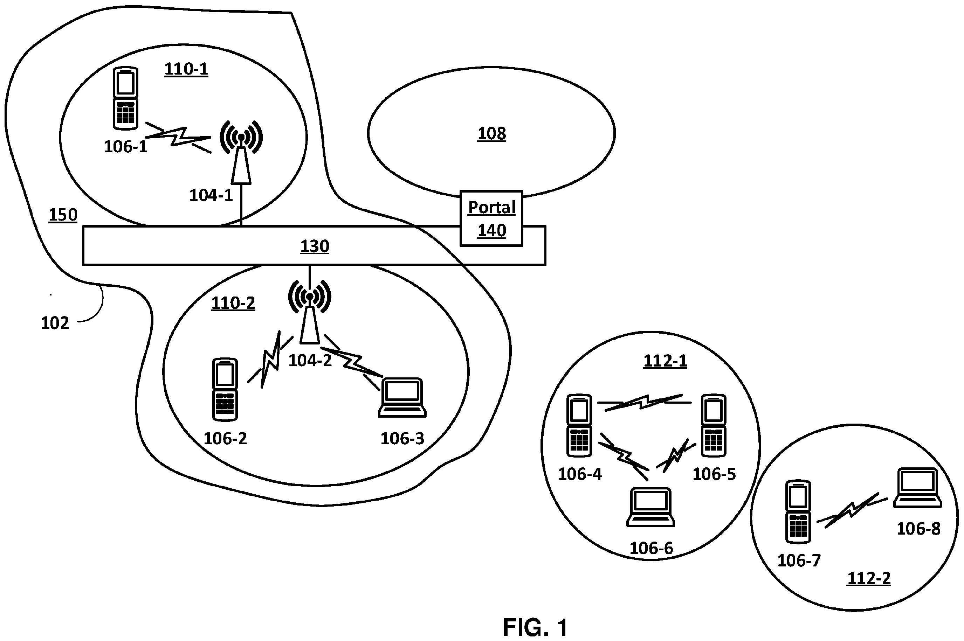

FIG. 1 shows example wireless communication networks. The example wireless communication networks may be a wireless local area network (WLAN) 102. The WLAN 102 may comprise an Institute of Electrical and Electronic Engineers (IEEE) 802.11 infrastructure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A computing device (e.g., wireless device and/or STA) may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY (physical layer) preamble and a payload in the form of a physical layer convergence protocol (PLCP) service data unit (PSDU). For example, the PSDU may comprise a PLCP preamble and header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

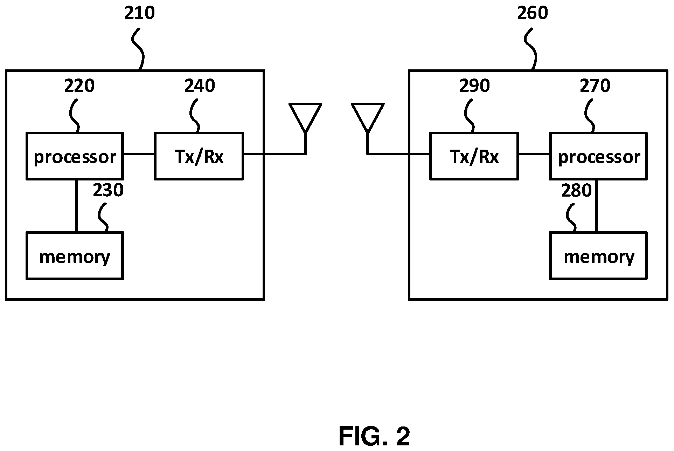

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

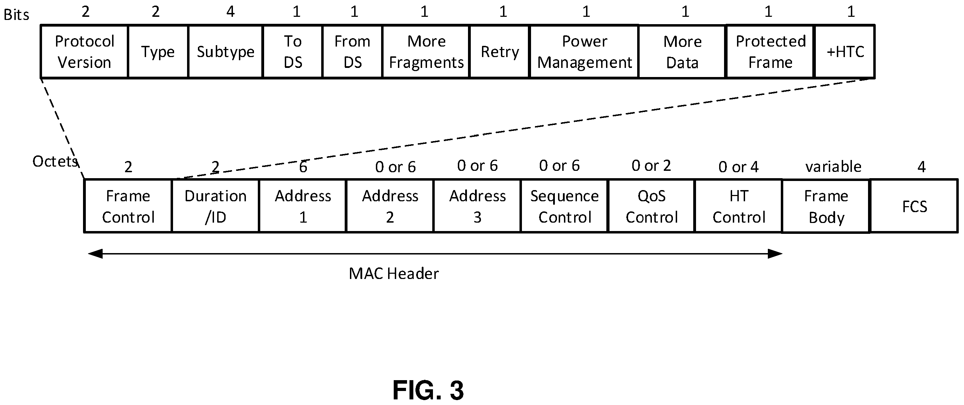

FIG. 3 shows an example format of a MAC frame. In operation, a STA may construct a subset of MAC frames for transmission and may decode a subset of received MAC frames upon validation. The particular subsets of frames that a STA may construct and/or decode may be determined by the functions supported by the STA. A STA may validate a received MAC frame using a frame check sequence (FCS) contained in the frame and may interpret certain fields from the MAC headers of all frames.

As shown in FIG. 3, a MAC frame may comprise a MAC header, a variable length frame body, and a frame check sequence (FCS). The MAC header may comprise a frame control field, an optional duration/ID field, address fields, an optional sequence control field, an optional quality of service (QoS) control field, and an optional high throughput (HT) control field.

The frame control field may comprise the following subfields: protocol version, type, subtype, "To DS", "From DS", "More Fragments", retry, power management, "More Data", protected frame, and +HTC (high throughput control). The protocol version subfield is invariant in size and placement across all revisions of the IEEE 802.11 standard. The value of the protocol version subfield may be 0 for MAC frames.

The type and subtype subfields together identify the function of the MAC frame. There are three frame types: control, data, and management. Each of the frame types has several defined subtypes. Bits within the subtype subfield may be used to indicate a specific modification of the basic data frame (subtype 0). For example, in data frames, the most significant bit (MSB) of the subtype subfield, bit 7 (B7) of the frame control field, is defined as the QoS subfield. For example, if the QoS subfield is set to 1, it may indicate a QoS data frame, which is a data frame that contains a QoS control field in its MAC header. The second MSB of the subtype field, bit 6 (B6) of the frame control field, if set to 1 in data subtypes, may indicate a data frame that contain no frame body field.

The "To DS" subfield may indicate whether a data frame is destined to the distribution system (DS). The "From DS" subfield may indicate whether a data frame originates from the DS. The "More Fragments" subfield may be set to 1 in all data or management frames that have another fragment to follow the MAC service data unit (MSDU) or MAC management protocol data unit (MMPDU) carried by the MAC frame. The "More Fragments" subfield may be set to 0 in all other frames in which the "More Fragments" subfield is present.

The retry subfield may be set to 1 in any data or management frame that is a retransmission of an earlier frame. The retry subfield may be set to 0 in all other frames in which the retry subfield is present. A receiving STA may use this indication to aid in the process of eliminating duplicate frames. These rules may not apply for frames sent by a STA under a block agreement. The power management subfield may be used to indicate the power management mode of a STA.

The "More Data" subfield may indicate to a STA in power save (PS) mode that bufferable units (Bus) are buffered for that STA at the AP. The "More Data" subfield may be valid in individually addressed data or management frames sent (e.g., transmitted) by an AP to a STA in PS mode. The "More Data" subfield may be set to 1 to indicate that at least one additional buffered BU is present for the STA.

The protected frame subfield may be set to 1, for example, if the frame body field contains information that has been processed by a cryptographic encapsulation algorithm. The +HTC subfield may indicate that the MAC frame contains a high throughput (HT) control field.

The duration/ID field of the MAC header may indicate various contents depending on the frame type and subtype and the QoS capabilities of the sending STA. For example, in control frames of the power save poll (PS-Poll) subtype, the duration/ID field may carry an association identifier (AID) of the STA that sent (e.g., transmitted) the frame in the 14 least significant bits (LSB), with the two most significant bits (MSB) may be set to 1. In other frames sent by STAs, the duration/ID field may contain a duration value (in microseconds) which may be used by a recipient to update a network allocation vector (NAV). The NAV may be a counter that indicates to a STA an amount of time during which the STA must defer from accessing the shared medium.

There may be up to four address fields may be present in the MAC frame format. The address fields may be used to indicate the basic service set identifier (BSSID), source address (SA), destination address (DA), transmitting address (TA), and receiving address (RA). Certain frames may not contain some of the address fields. Certain address field usage may be specified by the relative position of the address field (1-4) within the MAC header, independent of the type of address present in that field. For example, the address 1 field always identifies the intended receiver(s) of the frame, and the address 2 field, where present, always identifies the transmitter of the frame.

The sequence control field may comprise two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information can vary by frame type, frame subtype, and type of sending (e.g., transmitting) STA. The QoS control field is present in all data frames in which the QoS subfield of the subtype subfield is equal to 1.

The HT control field is present in QoS data, QoS null, and management frames as determined by the +HTC subfield of the frame control field. The frame body field is a variable length field that contains information specific to individual frame types and subtypes. The frame body may comprise one or more MSDUs or MMPDUs. The minimum length of the frame body is 0 octets. The FCS field may contain a 32-bit Cyclic Redundancy Check (CRC) code. The FCS field value may be calculated over all of the fields of the MAC header and the frame body field.

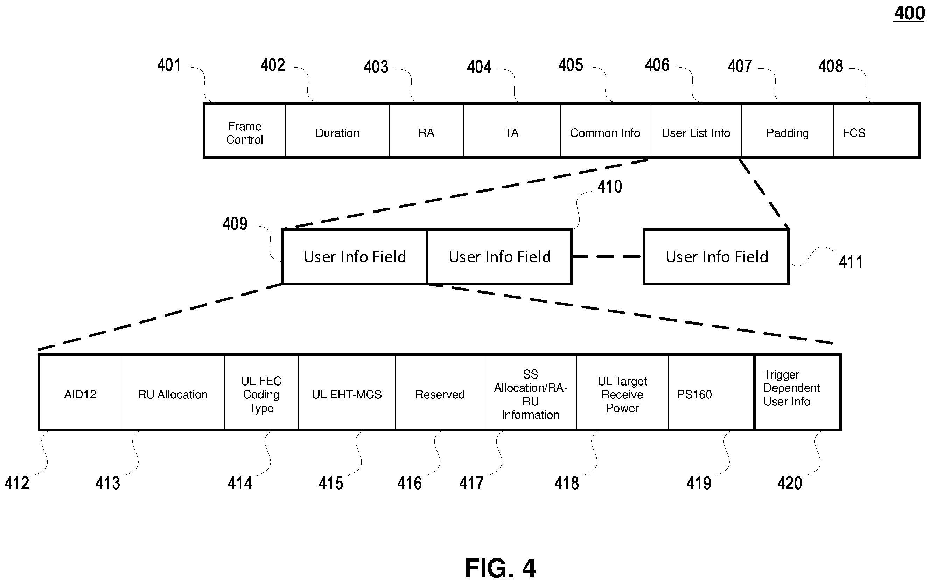

FIG. 4 shows an example trigger frame. Trigger frame 400 may correspond to a basic trigger frame, for example, as defined in the existing IEEE 802.11be standard amendment. Trigger frame 400 may be used by an access point (AP) to allocate resources for and solicit (e.g., request) one or more trigger-based (TB) physical layer protocol data unit (PPDU) transmissions from one or more STAs. Trigger frame 400 may also carry other information required by a responding STA to transmit a TB PPDU to the AP. As shown in FIG. 4, trigger frame 400 may comprise a Frame Control field 401, a Duration field 402, a receiver address (RA) field 403, a transmitter address (TA) field 404, a Common Info field 405, a User List Info field 406, a Padding field 507, and/or an FCS field 508. The Frame Control field 401 may comprise the following subfields: protocol version, type, subtype, "To DS", "From DS", "More Fragments", retry, power management, "More Data", protected frame, and/or +HTC.

The Duration field 402 may indicate various contents depending on frame type and subtype and the QoS capabilities of the sending STA. For example, in control frames of the power save poll (PS-Poll) subtype, the Duration field 402 may carry an association identifier (AID) of the STA that transmitted the frame in the 14 least significant bits (LSB), and the 2 most significant bits (MSB) may both be set to 1. In other frames sent by STAs, the Duration field 402 may contain a duration value (in microseconds) which may be used by a recipient to update a network allocation vector (NAV).

The RA field 403 may be the address of the STA that may be intended to receive the incoming transmission from the transmitting station. The TA field 404 may be the address of the STA sending (e.g., transmitting) the trigger frame 400 if the trigger frame 400 is addressed to STAs that may belong to a single BSS. The TA field 404 may be the transmitted BSSID if the trigger frame 400 is addressed to STAs from at least two different BSSs of the multiple BSSID set.

The Common Info field 405 may specific a trigger frame type of trigger frame 400, a transmit power of trigger frame 400 in dBm, and several key parameters of a TB PPDU that is transmitted by a STA in response to trigger frame 400. The trigger frame type of a trigger frame used by an AP to receive QoS data using UL MU operation is referred to as a basic trigger frame.

The User List Info field 406 may contain a User Info field 409 per STA addressed in trigger frame 400. The per STA User Info field 409 may include, among others, an AID subfield (e.g., AID12 subfield 412), an RU Allocation subfield 413, a Spatial Stream (SS) Allocation/RA-RU Information subfield 417, an UL Target Receive Power subfield 418, a PS160 subfield 419, and a Trigger Dependent User Info subfield 420. The Trigger Dependent User Info subfield 420 may be used by an AP to specify a preferred access category (AC) per STA. The preferred AC may set the minimum priority AC traffic that may be sent by a participating STA. The AP may determine the list of participating STAs, along with the BW, MCS, RU allocation, SS allocation, Tx power, preferred AC, and maximum duration of the TB PPDU per participating STA.

The Padding field 407 may be optionally present in trigger frame 400 to extend the frame length to give recipient STAs enough time to prepare a response for transmission one SIFS (short interframe spacing) after the frame is received. The Padding field 407, if present, is at least two octets in length and is set to all 1s.

The FCS field 408 may be used by a STA to validate a received frame and to interpret certain fields from the MAC headers of a frame.

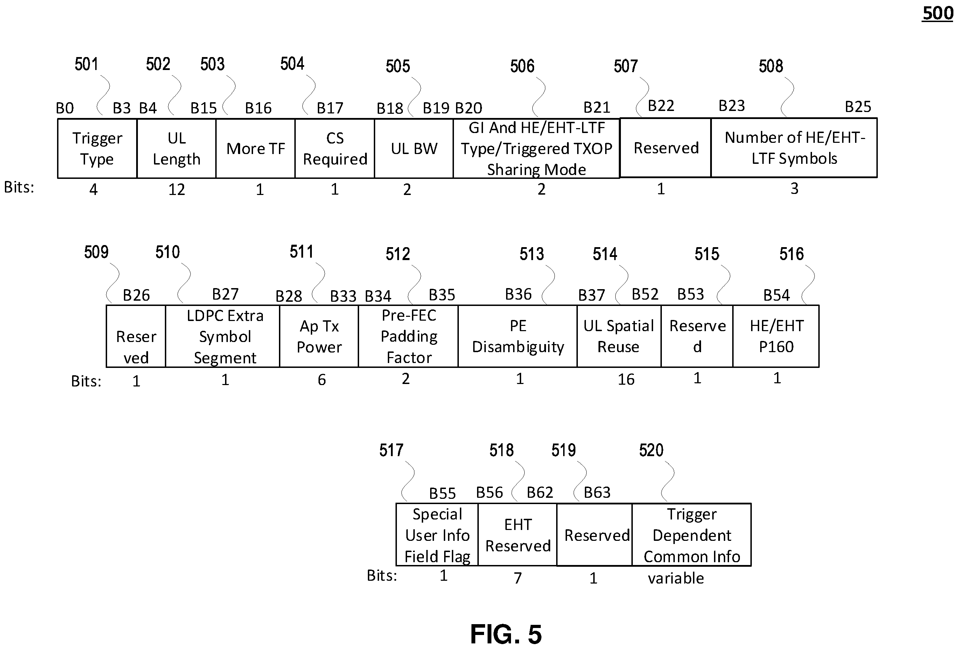

FIG. 5 shows an example Common Info field. Common Info field 500 may be an example of the Common Info field of trigger frame 400. As shown in FIG. 5, Common Info field 500 may include a Trigger Type subfield 501, a UL Length subfield 502, a More TF subfield 503, a CS required subfield 504, a UL BW subfield 505, a GI and HE/EHT-LTF Type/Triggered TXS Mode subfield 506, a first Reserved subfield 507, a Number of HE/EHT-LTF Symbols subfield 508, a second Reserved subfield 509, an LDPC Extra Symbol Segment subfield 510, an AP Tx Power subfield 511, a Pre-FEC Padding Factor subfield 512, a PE Disambiguity subfield 513, an UL Spatial Reuse subfield 514, a third Reserved subfield 515, an HE/EHT P160 subfield 516, a Special User Info Field Flag subfield 517, an EHT Reserved subfield 518, a fourth Reserved subfield 519, and a Trigger Dependent Common Info subfield 520. The Trigger Type subfield 501, UL Length subfield 502, More TF subfield 503, CS required subfield 504, UL BW subfield 505, GI and HE-LTF Type/Triggered TXS Mode subfield 506, first Reserved subfield 507, Number of HE/EHT-LTF Symbols subfield 508, second Reserved subfield 509, LDPC Extra Symbol Segment subfield 510, AP Tx Power subfield 511, Pre-FEC Padding Factor subfield 512, PE Disambiguity subfield 513, UL Spatial Reuse subfield 514, third Reserved subfield 515, HE/EHT P160 subfield 516, Special User Info Field Flag subfield 517, EHT Reserved subfield 518, fourth Reserved subfield 519, and Trigger Dependent Common Info subfield 520 may have the same content and interpretation as corresponding subfields of an EHT variant Common Info field defined in the IEEE 802.11be draft amendment ("IEEE P802.11be/D3.1, March 2023").

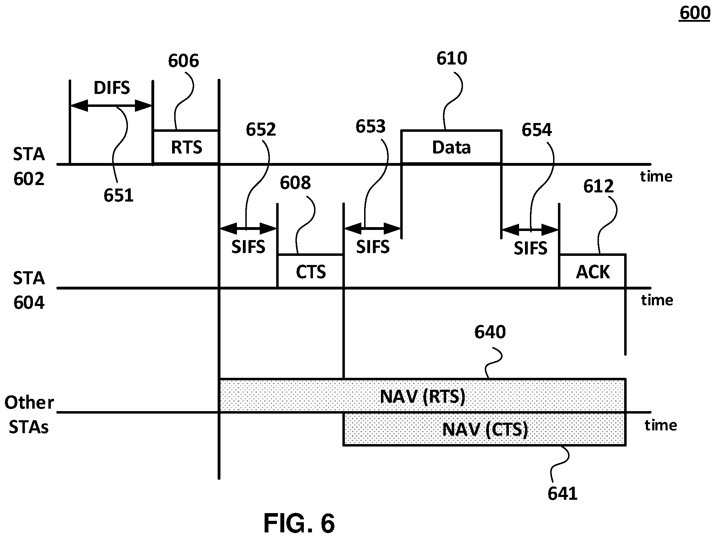

FIG. 6 shows an example of a Request-to-Send (RTS)/Clear-to-Send (CTS) procedure. Example 600 may be an example according to the RTS/CTS procedure as defined in section 10.3.2.9 of the IEEE 802.11 standard draft ("IEEE P802.11-REVme^{™}/D3.0, April 2023"). As shown in FIG. 6, example 600 may include STA 602 and STA 604. Other STAs of the same basic service set (BSS) may also be within communication range of STA 602 and STA 604.

STA 602 may send (e.g., transmit) an RTS frame 606 to STA 604. STA 602 may send (e.g., transmit) RTS frame 606, for example, to protect the transmission of a data frame 610, which STA 602 may intend to send (e.g., transmit), from hidden STA(s). The RTS frame 606 may include a Duration/ID field. The Duration/ID field may be set to the time, in microseconds, required to send (e.g., transmit) the data frame 610, plus one CTS frame 608, plus one ACK frame 612 (if required), plus three SIFS (Short Interframe Spacing) periods (e.g., SIFS 652, SIFS 653, and SIFS 654).

STA 604 may respond to the RTS frame 606 by sending (e.g., transmitting) a CTS frame 608 to STA 602. The CTS frame 608 may be sent (e.g., transmitted) one SIFS period 652 after the RTS frame 606. STA 604 may respond to the RTS frame 606, for example, if the RTS frame 606 is addressed to STA 604 and if the NAV was not set by a frame originating from STA 602. STA 604 may respond to the RTS frame 606 if the RTS frame 606 is addressed to STA 604 and if the NAV indicates idle. For a non-S1G STA, the NAV may indicate idle if the NAV count is 0. For a non-S1G STA, the NAV may indicate idle if the NAV count is non-zero and a non-bandwidth signaling TA, obtained from a TA field of the RTS frame 606, matches a saved transmission opportunity (TXOP) holder address. For an S1G STA, the NAV may indicate idle if both the NAV and RID (response indication deferral) counters are 0. For an S1G STA, the NAV may indicate idle if either the NAV or RID counter is non-zero and the TA field of the RTS frame 606 matches the saved TXOP holder address.

STA 604 may set an RA field of the CTS frame 608 to a non-bandwidth signaling TA obtained from the TA field of the RTS frame 606. STA 604 may set a Duration field of the CTS frame 608, for example, based on the Duration/ID field of the RTS frame 606, namely as equal to the value of the Duration/ID field of the RTS frame 606, adjusted by subtracting the time required to send (e.g., transmit) the CTS frame 608 and one SIFS period.

STA 602 may wait one SIFS period 653 before sending (e.g., transmitting) data frame 610, for example, based on receiving the CTS frame 608. STA 604 may transmit an ACK frame 612 based on (e.g., in response) to the data frame 610. STA 604 may transmit the ACK frame 612 one SIFS period 654 after receiving the data frame 610.

Other STAs within communication range of STA 602 and STA 604, and belonging to the same BSS, may set their NAVs based on (e.g., according to) the RTS frame 606 and/or the CTS frame 608. For example, a STA receiving the RTS frame 606 may set its NAV based on the Duration/ID field of the RTS frame 606. Another STA receiving the CTS frame 608 may set its NAV based on the Duration field of the CTS frame 608. The other STAs may not access the channel using Enhanced Distributed Channel Access (EDCA) until the end of transmission of the ACK frame 612.

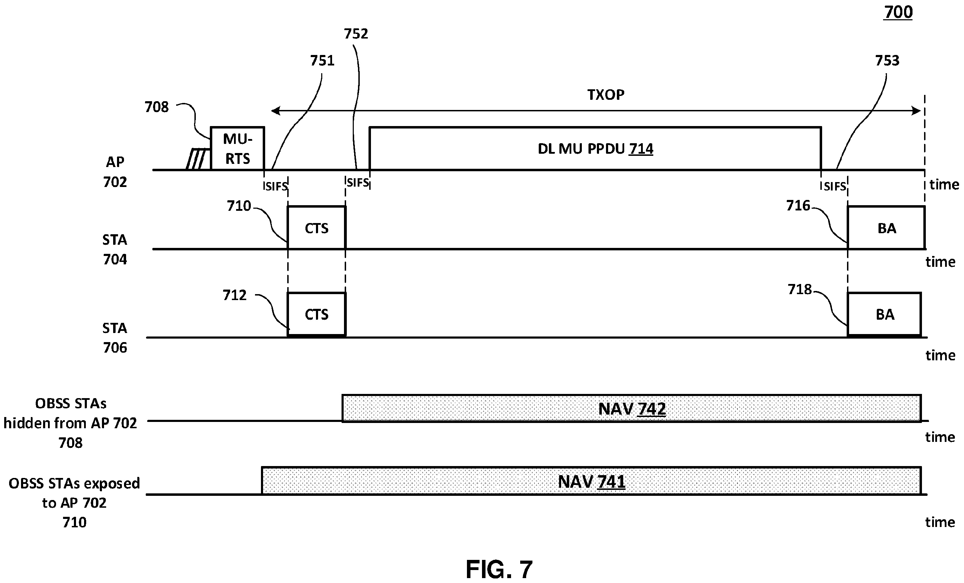

FIG. 7 shows an example multi-user Request-to-Send (MU-RTS)/Clear-to-Send (CTS) method. Example 700 may be an example according to the MU-RTS/CTS procedure as defined in section 26.2.6 of the IEEE 802.11 standard draft ("IEEE P802.11-REVme^{™}/D3.0, April 2023"). As shown in FIG. 7, example 700 may include an AP 702, STA 704 and STA 706. STA 704 and STA 706 may be associated with the AP 702. Example 700 shows STAs of an overlapping basic service set (OBSS) relative to the BSS of AP 702 (OBSS STAs). The OBSS STAs, as shown in FIG. 7, may be hidden from the AP 702 (e.g., outside of the communication range of the AP 702) or exposed to the AP 702 (e.g., within the communication range of the AP 702).

As described with respect to FIG. 7, the AP 702 may wish to send (e.g., transmit) a downlink (DL) multi-user (MU) PPDU 714 to STA 704 and STA 706. The DL MU PPDU 714 may comprise data for each of STA 704 and STA 706. The DL MU PPDU 714 may occupy a plurality of channels (e.g., 20 MHz channels). Each channel of the plurality of channels may carry the data for a respective STA (e.g., STA 704, STA 706) served by the DL MU PPDU 714.

The AP 702 may use the MU-RTS/CTS procedure to initiate a TXOP and to protect the TXOP frame exchange sequence, for example, to protect the transmission of the DL MU PPDU 714 to STA 704 and STA 706 from interference by OBSS STAs hidden from the AP 702. The AP 702 may initiate the TXOP by sending (e.g., transmitting) an MU-RTS trigger frame 708 that may solicit simultaneous CTS frame transmissions from STA 704 and STA 706.

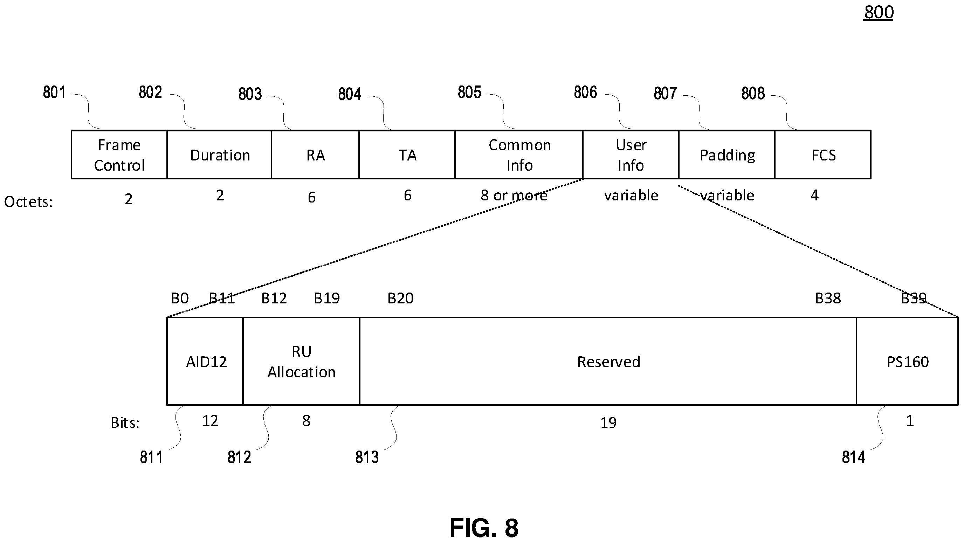

The MU-RTS trigger frame 708 may have a format of a MU-RTS trigger frame 800 as shown in FIG. 8. The MU-RTS trigger frame 708 may comprise a frame control field 801, a duration field 802, an RA field 803, a TA field 804, a common info field 805, one or more user info fields 806, a padding field 807, and an FCS field 808. The frame control, TA, RA, padding, and FCS fields 808 may correspond to fields of the trigger frame 400 described herein. The common info field 805 may have a format of the common info field 500 described herein. The duration field 802 may be set to the time, in microseconds, required to send (e.g., transmit) the DL MU PPDU 714, plus the time required to send (e.g., transmit) one CTS frame, one ACK frame (if required), and three SIFS periods.

The one or more user info fields 806 may correspond respectively to the one or more STAs solicited by the MU-RTS trigger frame 708. As described with respect to FIG. 7, the MU-RTS trigger frame 708 may comprise a user info field 806 for each of STA 704 and STA 706 indicating that a CTS frame is solicited from each of STA 704 and STA 706. As shown in FIG. 8, a user info field 805 may comprise an AID12 subfield 811, an RU allocation subfield 812, reserved bits 813, and a PS 160 subfield 814. The AID12 subfield 811 may comprise an association identifier of the STA to which the user info field 806 is addressed. The RU allocation subfield 812 may indicate a channel on which the solicited STA may send (e.g., transmit) the CTS frame. For example, this may include a primary 20 MHz channel, a primary 40 MHz, a primary 80 MHz channel, a primary 160 MHz, an 80+80 MHz channel, or a 320 MHz channel.

AP 702 may send the MU-RTS trigger frame 708 in a PPDU that may occupy one or more channels (e.g., 20 MHz channels). For each channel occupied by the PPDU that may carry the MU-RTS trigger frame 708, the AP 702 may request at least one non-AP STA to send a CTS frame that may occupy that channel. The AP 702 may not request that a non-AP STA send a CTS frame that may occupy a channel that is not occupied by the PPDU carrying the MU-RTS trigger frame 708.

If sending (e.g., transmitting) the MU-RTS trigger frame 708, the AP 702 may wait for a CTSTimeout interval of aSIFSTime + aSlotTime + aRxPHYStartDelay that may begin if a MAC layer of the AP 702 receives a PHYTXEND.confirm primitive for the transmitted MU-RTS trigger frame 708. If the MAC layer may not receive a PHY-RXEARLYSIG.indication or a PHY-RXSTART.indication primitive during the CTSTimeout interval, the AP 702 may conclude that the transmission of the MU-RTS trigger frame 708 has failed. If the MU-RTS trigger frame 708 may have initiated a TXOP, the AP 702 may invoke its backoff procedure. If the MAC layer receives a PHY-RXEARLYSIG.indication or a PHY-RXSTART.indication primitive during the CTSTimeout interval, the MAC layer may wait for the corresponding PHY-RXEND.indication primitive to determine whether transmission of the MU-RTS trigger frame 708 was successful. The receipt of a CTS frame from any non-AP STA addressed by the MU-RTS trigger frame 708 before the PHY-RXEND.indication primitive may be interpreted as the successful transmission of the MU-RTS trigger frame 708, permitting the frame exchange sequence to continue. The receipt of any other type of frame may be interpreted as a failure of the transmission of MU-RTS trigger frame 708. The AP 702 may process the received frame. If the MU-RTS trigger frame 708 may have initiated a TXOP, the AP 702 may invoke its backoff procedure at the PHY-RXEND.indication primitive.

STA 704 and STA 706 may respond by sending (e.g., transmitting) respectively CTS frame 710 and CTS frame 712 to the AP 702, for example, based on receiving the MU-RTS trigger frame 708. STA 704 and STA 706 may begin the transmission of the CTS frame 710 and CTS frame 712, respectively, at the SIFS time period 751 after an end of a received PPDU comprising the MU-RTS trigger frame 708. STA 704 (or STA 706) may respond to the MU-RTS trigger frame 708 with a CTS frame 710 (or a CTS frame 712) if the following conditions may be met: the MU-RTS trigger frame 708 may comprise a user info field addressed to the STA (the AID12 subfield of the user info field is equal to the 12 LSBs of the AID of the STA) and the MU-RTS trigger frame 708 may be sent by an AP with which the STA is associated; and the UL MU CS condition may indicate that the medium is idle as described in section 26.5.2.5 (UL MU CS mechanism) of the IEEE 802.11 standard ("IEEE P802.11-REVme^{™}/D3.0, April 2023"). Otherwise, if one of the conditions is not met, STA 704 (or STA 706) may not send a CTS frame 710 (or a CTS frame 712) to AP 702.

STA 704 and STA 706 may set an RA field of respectively CTS frame 710 and CTS frame 712 to a TA obtained from the TA field of the MU-RTS trigger frame 708. STA 704 and STA 706 may set a duration field of respectively CTS frame 710 and CTS frame 712, for example, based on the duration field of the MU-RTS trigger frame 708, as equal to the value of the duration field of the MU-RTS trigger frame 708, adjusted by subtracting the time required to send (e.g., transmit) respectively CTS frame 710 and CTS frame 712 and one SIFS period.

OBSS STAs exposed to the AP 702 710 may receive the MU-RTS trigger frame 708, for example, due to being within the communication range of the AP 702. As shown in FIG. 7, based on receiving the MU-RTS trigger frame 708, OBSS STAs exposed to AP 702 710 may set their respective NAVs based on the duration field of the MU-RTS trigger frame 708. The OBSS STAs exposed to AP 702 710 may not access the wireless medium for the duration of the TXOP initiated by the AP 702.

OBSS STAs hidden from AP 702 708 may not receive the MU-RTS trigger frame 708, for example, due to being outside the communication range of the AP 702. As shown in FIG. 7, some of the OBSS STAs hidden from AP 702 708 may receive the CTS frame 710 and/or the CTS frame 712 and set their respective NAVs based on the duration field of the CTS frame 710 and/or the CTS frame 712. Some of the OBSS STAs hidden from AP 702 708 may also not access the wireless medium for the duration of the TXOP initiated by the AP 702.

The AP 702 may wait one SIFS period 752 before sending (e.g., transmitting) the DL MU PPDU 714, for example, based on receiving the CTS frame 710 and/or the CTS frame 712. STA 704 and STA 706 may respond by sending (e.g., transmitting) respective BlockAck (BA) frame 716 and BA frame 718 to AP 702, for example, based on receiving the DL MU PPDU 714.

If a large (or long) PPDU (e.g., greater than 2 milliseconds (it is noted that the maximum PPDU duration is 5.484 milliseconds according to some 802.11 standards)) may be sent (e.g., transmitted) in a TXOP (e.g., the PPDU comprising the data frame 610 as shown in FIG. 6 or the DL MU PPDU 714 as shown in FIG. 7), other available downlink and/or uplink traffic may incur large (e.g., long) delays before it may be sent (e.g., transmitted) over the wireless medium. To solve this potential problem, a method called pre-emption has been proposed. According to this method, a large PPDU may be divided into multiple short PPDUs (e.g., shorter than 2 milliseconds) that may be sent (e.g., transmitted) successively during the TXOP. A PPDU comprising other downlink and/or uplink traffic may be allowed to be sent (e.g., transmitted) over the wireless medium in place of ("pre-empt") one or more of the short PPDUs. The PPDU may be referred to as a "pre-empting PPDU" and the one or more of the short PPDUs may be referred to as "pre-empted PPDUs." The pre-empted PPDUs may be sent (e.g., transmitted) after the pre-empting PPDU has been sent (e.g., transmitted).

An access point may use an RTS/CTS frame exchange to protect its transmission to a specific station, for example, to prevent stations from contending for channel access during a TXOP,. However, the RTS/CTS frame exchange may not prevent some stations, which have not heard the RTS/CTS frame, from attempting to access the same channel. If such stations access the same channel during the transmission of higher priority data (e.g., low latency PPDU, pre-empting PPDU as described herein), the transmission of the higher priority data may fail.

As described herein, an access point may send a multi-user request-to-send (MU-RTS) frame to a plurality of stations (e.g., a first station, a second station, etc.). The MU-RTS frame may be used to request a first CTS frame from a first station, to which downlink data may be available, and a second CTS frame from a second station, which may be expecting to receive higher priority downlink data (e.g., data requiring lower latency). For example, the access point may commence transmission of the available data to the firs station, based on receiving the first CTS frame. If the higher priority downlink data may become available for the second station while data are being transmitted to the first station, the access point may suspend the transmission to the first station and promptly send the higher priority downlink data (e.g., data requiring lower latency) to the second station, based on receiving the second CTS frame. By using the second CTS frame as described herein, the transmission of the higher priority downlink data (e.g., downlink data requiring lower latency) may be protected against potential delays.

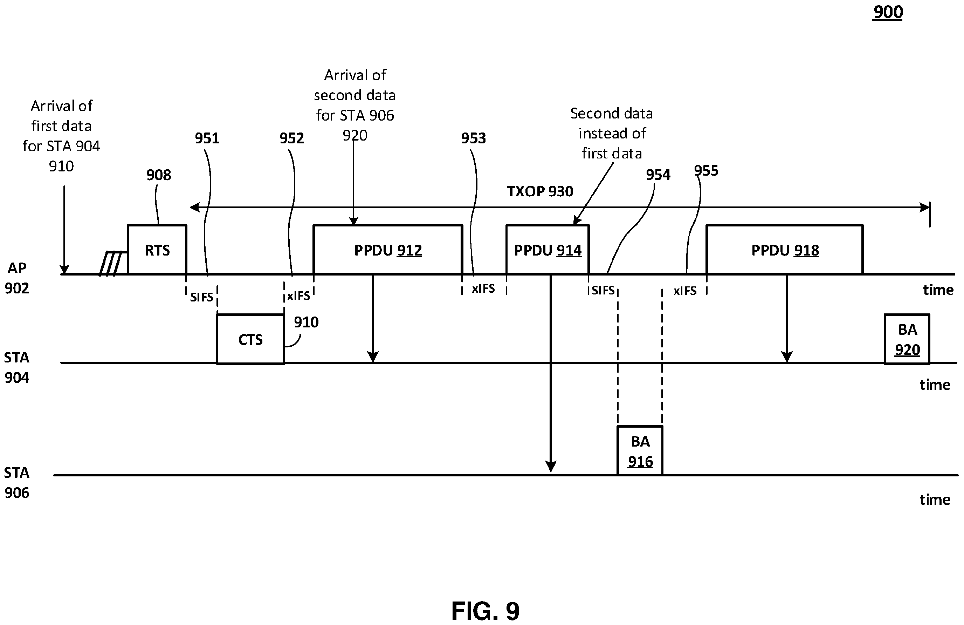

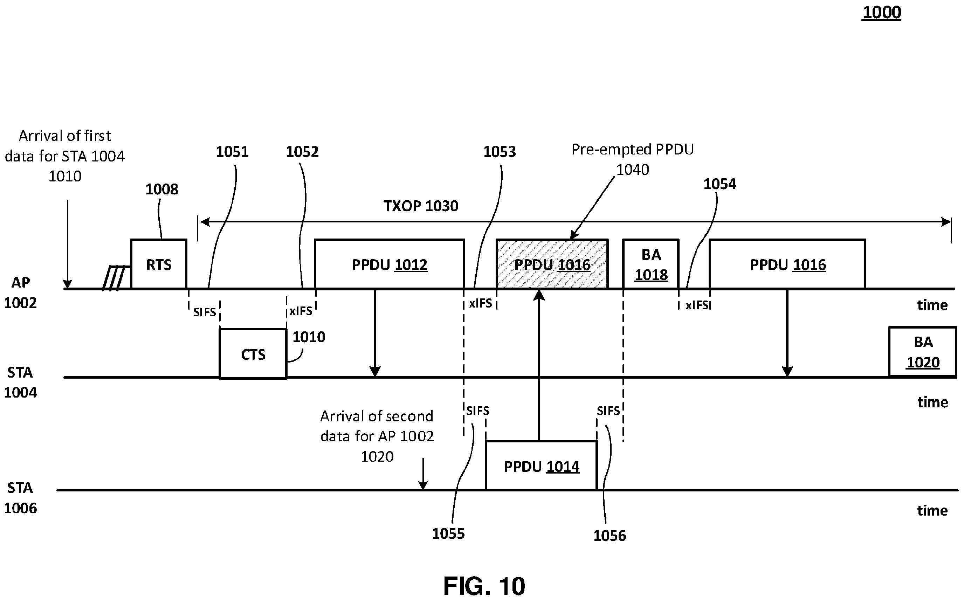

FIG. 9 and FIG. 10 show examples of pre-emption. FIG. 9 shows an example downlink pre-emption. As shown in FIG. 9, example 900 may include an AP 902, STA 904, and STA 906. STA 904 and STA 906 may be associated with the AP 902. As shown in FIG. 9, AP 902 may have first data arrive for transmission to STA 906 910. To send (e.g., transmit) the first data to STA 904, AP 902 may send (e.g., transmit) an RTS frame 908 to STA 904. The RTS frame 908 may indicate a duration of a TXOP 930 to send (e.g., transmit) the first data to STA 904 (and including any intervening interframe spaces and the transmission time of an ACK frame if required). The first data may be sent (e.g., transmitted) using multiple PPDUs that may be shorter than a pre-defined size (e.g., 2 milliseconds). The multiple PPDUs may be sent (e.g., transmitted) successively on the wireless medium, separated from one another by an interframe space, xIFS. The interframe space xIFS may be chosen as larger than a SIFS. For example, the interframe space xIFS may be equal to a SIFS plus one or more slot times (a slot time is 9 µs in the 5 GHz band). The duration indicated in the RTS frame 908 may be based on the transmission times of the multiple PPDUs, the intervening interframe spaces, and the transmission time of an ACK frame, for example, if required, from STA 904.

Based on receiving the RTS frame 908, and assuming that its NAV indicates idle, STA 904 may respond to AP 902 by sending (e.g., transmitting) a CTS frame 910 to AP 902. STA 904 may send (e.g., transmit) a CTS frame 910, a SIFS period 951 after receiving the RTS frame 908. AP 902 may begin sending (e.g., transmitting) one or more PPDUs comprising the first data to STA 904. For example, AP 902 may send (e.g., transmit) a PPDU 912 comprising a first portion of the first data to STA 904. AP 902 may send (e.g., transmit) the PPDU 912, an xIFS period 952 after receiving the CTS frame 910 from STA 904.

As described with respect to FIG. 9, AP 902 may have second data arrive for transmission to STA 906 920, for example, while sending (e.g., transmitting) PPDU 912 to STA 904. The second data may be low latency data that may require urgent transmission to STA 906. AP 902 may choose to suspend (e.g., pre-empt) transmission of a subsequent one of the multiple PPDUs (comprising the first data) being sent (e.g., transmitted) to STA 904, for example, to send (e.g., transmit) one or more PPDUs comprising the second data to STA 906. For example, AP 902 may pre-empt one or more PPDUs to STA 904 to send (e.g., transmit) a PPDU 914 to STA 906. The PPDU 914 may be of the same size, shorter, or longer than the one or more pre-empted PPDUs. AP 902 may send (e.g., transmit) the PPDU 914, an xIFS period 953 after finishing sending (e.g., transmitting) the PPDU 912.

STA 906 may acknowledge the PPDU 914 by sending (e.g., transmitting) a BA frame 916 to AP 902. Based on receiving the BA frame 916, AP 902 may resume transmission of the multiple PPDUs to STA 904. For example, AP 902 may send (e.g., transmit) a PPDU 918 comprising a second portion of the first data to STA 904. AP 902 may send (e.g., transmit) the PPDU 918, an xIFS period 955 after receiving the BA frame 916 from STA 906. The PPDU 918 may correspond to a PPDU pre-empted to send (e.g., transmit) the PPDU 914 or to another PPDU. If the PPDU 918 may be the final PPDU of the multiple PPDUs sent (e.g., transmitted) to STA 904, STA 904 may send a BA frame 920 to AP 902 based on receiving the PPDU 918, marking the end of the TXOP 930.

FIG. 10 shows an example uplink pre-emption. As shown in FIG. 10, example 1000 may include an AP 1002 and STA 1004 and STA 1006. STA 1004 and STA 1006 may be associated with the AP 1002. As shown in FIG. 10, example 1000 may begin with the arrival at AP 1002 of first data for transmission to STA 1004 1010. To send (e.g., transmit) the first data to STA 1004, AP 1002 may send (e.g., transmit) an RTS frame 1008 to STA 1004. The RTS frame 1008 may indicate a duration of a TXOP 1030 to send (e.g., transmit) the first data to STA 1004 (and may include any intervening interframe spaces and/or the transmission time of an ACK frame, for example, if required). The first data may be sent (e.g., transmitted) using multiple PPDUs that are shorter than a pre-defined size (e.g., 2 milliseconds). The multiple PPDUs may be sent (e.g., transmitted) successively on the wireless medium, separated from one another by an interframe space, xIFS. The interframe space xIFS may be chosen as larger than a SIFS. For example, the interframe space xIFS may be equal to a SIFS plus one or more slot times (a slot time is 9 µs in the 5 GHz band). The duration indicated in the RTS frame 1008 may be based on the transmission times of the multiple PPDUs, the intervening interframe spaces, and/or the transmission time of an ACK frame, for example, if required, from STA 1004.

Based on receiving the RTS frame 1008, and assuming that its NAV indicates idle, STA 1004 may respond to AP 1002 by sending (e.g., transmitting) a CTS frame 1010 to AP 1002. STA 1004 may send (e.g., transmit) the CTS frame 1010, a SIFS period 1051 after receiving the RTS frame 1008. AP 1002 may begin sending (e.g., transmitting) one or more PPDUs comprising the first data to STA 1004. For example, AP 1002 may send (e.g., transmit) a PPDU 1012 comprising a first portion of the first data to STA 1004. AP 1002 may send (e.g., transmit) the PPDU 1012 an xIFS period 1052 after receiving the CTS frame 1010 from STA 1004.

STA 1006 may have second data arrive for transmission to AP 1002 1020, for example, while AP 1002 may send (e.g., transmit) the PPDU 1012 to STA 1004. The second data may be low latency data that may require urgent transmission to AP 1002. STA 1006 may begin sending (e.g., transmitting) a PPDU 1014 comprising the second data, a SIFS period 1055 after receiving the PPDU 1012 from AP 1002. As AP 1002 may separate successive ones of the multiple PPDUs by an xIFS (e.g., xIFS 1053 and xIFS 1054), STA 1006 may begin sending (e.g., transmitting) the PPDU 1014 before AP 1002 may begin sending (e.g., transmitting) a PPDU 1016 to STA 1004. The PPDU 1014 from STA 1006 to AP 1002 may pre-empt the PPDU 1016 from AP 1002 to STA 1004. The PPDU 1014 may be of the same size, shorter, or longer than the PPDU 1016.

AP 1002 may acknowledge the PPDU 1014 by sending (e.g., transmitting) a BA frame 1018 to STA 1006. AP 1002 may resume transmission of the multiple PPDUs to STA 1004. For example, AP 1002 may send (e.g., transmit) the PPDU 1016 comprising a second portion of the first data to STA 1004. AP 1002 may send (e.g., transmit) the PPDU 1016, an xIFS period 1054 after sending (e.g., transmitting) the BA frame 1018 to STA 1006. If the PPDU 1016 may be the final PPDU of the multiple PPDUs sent (e.g., transmitted) to STA 1004, STA 1004 may send a BA frame 1020 to AP 1002, based on receiving the PPDU 1016, marking the end of the TXOP 1030.

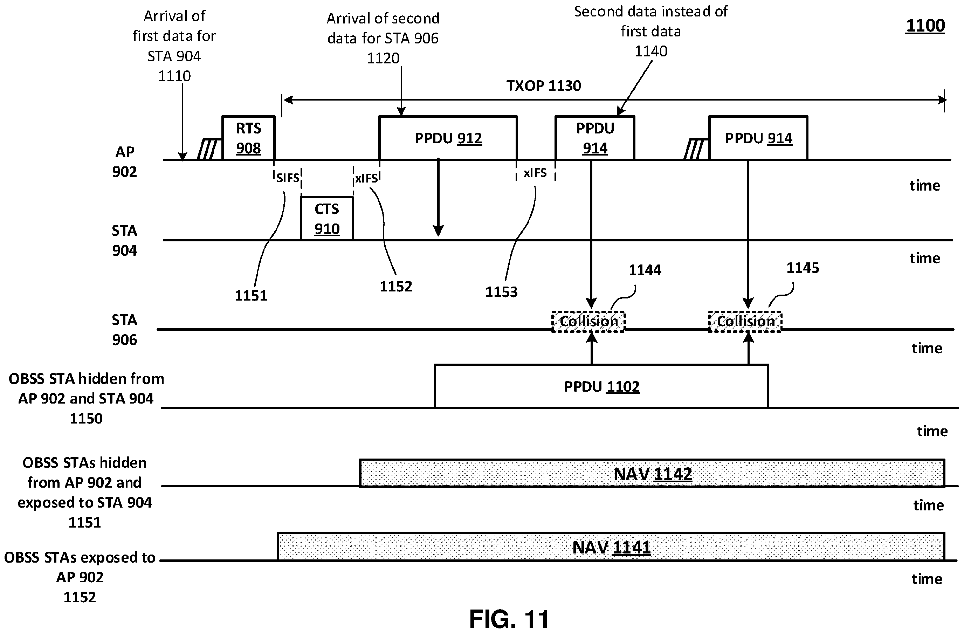

FIG. 11 shows an example downlink pre-emption. As shown in FIG. 11, example 1100 may include AP 902, STA 904, and STA 906 described in example 900 herein. Additionally, example 1100 may include STAs of an OBSS relative to the BSS of AP 902 (OBSS STAs). The OBSS STAs, as shown in FIG. 11, may include STAs exposed to AP 902 (within the communication range of AP 902), STAs hidden from AP 902 (outside of the communication range of AP 902) and exposed to STA 904 (within the communication range of STA 904), and STAs hidden from both AP 902 and STA 904 (outside the communication range of both AP 902 and STA 904). Example 1100 may begin with the arrival at AP 902 of first data for transmission to STA 904. AP 902 may send (e.g., transmit) an RTS frame 908 to STA 904, for example, to send (e.g., transmit) a first data to STA 904. The RTS frame 908 may indicate a duration of a TXOP 1130 to send (e.g., transmit) the first data to STA 904 (and may include any intervening interframe spaces and/or the transmission time of an ACK frame, for example, if required). The first data may be sent (e.g., transmitted) using multiple PPDUs that are shorter than a pre-defined size (e.g., 2 milliseconds). The multiple PPDUs may be sent (e.g., transmitted) successively on the wireless medium, separated from one another by an interframe space, xIFS. The interframe space xIFS may be chosen as larger than a SIFS. For example, the interframe space xIFS may be equal to a SIFS plus one or more slot times (e.g., a slot time is 9 µs in the 5 GHz band). The duration indicated in the RTS frame 908 may be based on the transmission times of the multiple PPDUs, the intervening interframe spaces, and/or the transmission time of an ACK frame, for example, if required, from STA 904.

Based on receiving the RTS frame 908, and assuming that its NAV indicates idle, STA 904 may respond to AP 902 by sending (e.g., transmitting) a CTS frame 910 to AP 902. STA 904 may send (e.g., transmit) the CTS frame 910, a SIFS period 1151 after receiving the RTS frame 908. AP 902 may begin sending (e.g., transmitting) one or more PPDUs comprising the first data to STA 904. For example, AP 902 may send (e.g., transmit) a PPDU 912 comprising a first portion of the first data to STA 904. AP 902 may send (e.g., transmit) the PPDU 912, an xIFS period 1152 after receiving the CTS frame 910 from STA 904.

OBSS STAs exposed to AP 902 1152 may receive the RTS frame 908, for example, due to being within the communication range of AP 902. As shown in FIG. 11, based on receiving the RTS frame 908, OBSS STAs exposed to AP 902 may set their respective NAVs (e.g., NAV 1141) based on the duration field of the RTS frame 908. The OBSS STAs exposed to AP 902 may not access the wireless medium for the duration of the TXOP 1130 that may be initiated by AP 902.

OBSS STAs hidden from AP 902 and exposed to STA 904 1151 may not receive the RTS frame 908 but receive the CTS frame 910. As shown in FIG. 11, OBSS STAs hidden from AP 902 and exposed to STA 904 1151 may set their respective NAVs (e.g., NAV 1142) based on the duration field of the CTS frame 910. OBSS STAs hidden from AP 902 and exposed to STA 904 1151 may not access the wireless medium for the duration of the TXOP 1130 that may be initiated by AP 902.

OBSS STAs hidden from both AP 902 and STA 904 1150 may receive neither RTS frame 908 nor CTS frame 910, for example, due to being outside the communication range of both AP 902 and STA 904. OBSS STAs hidden from both AP 902 and STA 904 1150 may access the wireless medium during the TXOP 1130 that may be initiated by AP 902.

As described with respect to FIG. 11, AP 902 may have second data arrive for transmission to STA 906 1120, for example, while sending (e.g., transmitting) the PPDU 912 to STA 904. The second data may be low latency data that requires urgent transmission to STA 906. AP 902 may choose to pre-empt a subsequent one of the multiple PPDUs (comprising the first data) being sent (e.g., transmitted) to STA 904, for example, to send (e.g., transmit) one or more PPDUs comprising the second data to STA 906. AP 902 may pre-empt one or more PPDU to STA 904, for example, to send (e.g., transmit) the PPDU 914 to STA 906. PPDU 914 may be of the same size, shorter, or longer than the one or more pre-empted PPDUs. AP 902 may send (e.g., transmit) the PPDU 914, an xIFS period 1153 after finishing sending (e.g., transmitting) PPDU 912.

An OBSS STA hidden from AP 902 and STA 904 1150 may begin transmission of a PPDU 1102, for example, during the TXOP 1130. As described herein, the OBSS STA hidden from AP 902 and STA 904 1150 may send (e.g., transmit) the PPDU 1102 during the TXOP 1130, for example, due to not receiving either of the RTS frame 908 and/or the CTS frame 910. The PPDU 1102 may cause OBSS interference (e.g., collision 1144) at STA 906 at the time of transmission of PPDU 914 from AP 902 to STA 906. STA 906 may fail to receive the PPDU 914 from AP 902. AP 902 may re-transmit the PPDU 914 to STA 906. The retransmission of the PPDU 914 may also fail (e.g., collision 1145), for example, if the transmission of the PPDU 1102 may be still ongoing. If the second data for STA 906 is low latency data, AP 902 may fail to send (e.g., transmit) the second data to STA 906 in a timely manner. AP 902 may discard the second data intended for STA 906, for example, despite using pre-emption to send (e.g., transmit) the second data to STA 906.

As described herein, an AP may be enabled to pre-emptively protect traffic that may be anticipated to be pre-emptive for associated STAs. Pre-emptive protection of anticipated pre-empting traffic to a first STA may be performed together with the protection of traffic available for transmission to a second STA. Pre-emptive protection may be used when the traffic available for transmission may be of a first category. The first category may comprise a non-low latency traffic category. Pre-emptive protection may be used, for example, if the anticipated traffic to the first STA may be of a second category. The second category may comprise a low latency traffic category.

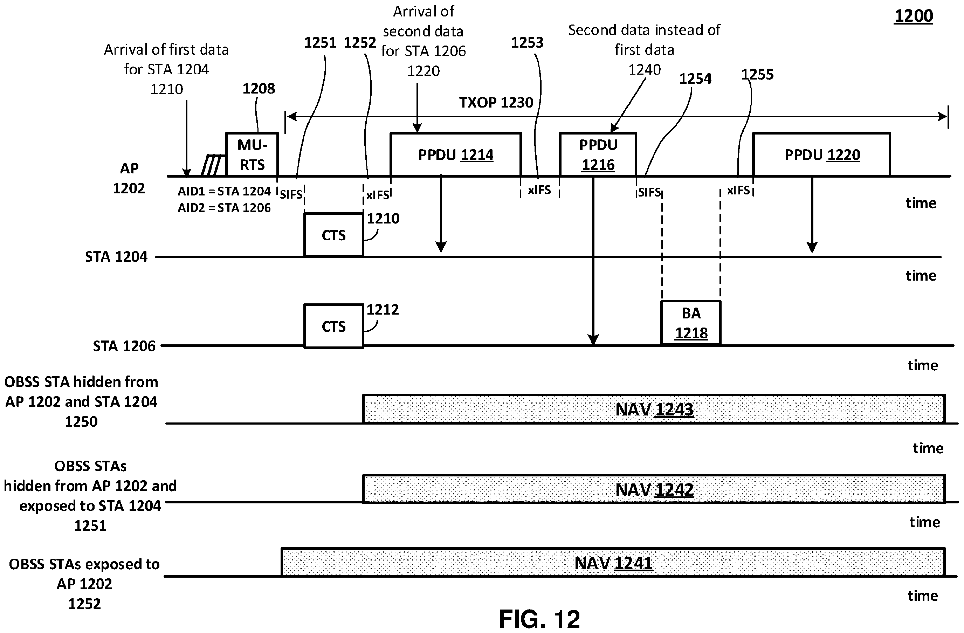

FIG. 12 shows an example pre-emptive protection of pre-empting traffic. As shown in FIG. 12, example 1200 may include an AP 1202, STA 1204, and STA 1206. Additionally, example 1200 may include STAs of an OBSS relative to the BSS of AP 1202 (OBSS STAs). The OBSS STAs, as shown in FIG. 12, may include STAs exposed to AP 1202, STAs hidden from AP 1202 and exposed to STA 1204, and/or STAs hidden from both AP 1202 and STA 1204.

As shown in FIG. 12, example 1200 may begin with the arrival at AP 1202 of first data for transmission to STA 1204. For example, the first data may be of a first category. The first category may be a non-low latency traffic category. AP 1202 may send (e.g., transmit) an MU-RTS trigger frame 1208 that may solicit a first CTS frame 1210 from STA 1204 and/or a second CTS frame 1212 from STA 1206, for example, to send (e.g., transmit) (and protect the transmission of) the first data to STA 1204. AP 1202 may send (e.g., transmit) the MU-RTS trigger frame 1208, for example, based on the first data being of the first category. AP 1202 may send (e.g., transmit) the MU-RTS trigger frame 1208 that may solicit the second CTS frame 1212 from STA 1206, for example, based on anticipating pre-empting the second data for STA 1206. AP 1202 may solicit the second CTS frame 1212 from STA 1206 to protect the transmission of the second data (in one or more pre-empting PPDU) that may arrive for STA 1206 during the transmission of the first data to STA 1204. For example, the second data may be of a second category. The second category may be a low latency traffic category. The low latency traffic category may comprise one or more pre-determined traffic types (e.g., voice/video). The one or more pre-determined traffic types may be associated with one or more pre-determined traffic identifiers (TIDs). AP 1202 may send (e.g., transmit) the MU-RTS trigger frame 1208 that may solicit the second CTS frame 1212 from STA 1206, for example, based on the first data being of the first category and based on anticipating the second data of the second category for STA 1206. AP 1202 may anticipate arrival of pre-empting second data for STA 1206, for example, based on presence of a traffic stream of the second category at STA 1206. The presence of the traffic stream of the second category at STA 1206 may be signaled to AP 1202 in various frames, such as a restricted target wake time (R-TWT) setup request frame, an EHT stream classification service (SCS) request frame, etc.

The MU-RTS trigger frame 1208 may indicate a duration of a TXOP 1230 to send (e.g., transmit) the first data to STA 1204 (and may include any intervening interframe spaces and/or the transmission time of an ACK frame, for example, if required). The first data may be sent (e.g., transmitted) using multiple PPDUs that are shorter than a pre-defined size (e.g., 2 milliseconds). The multiple PPDUs may be sent (e.g., transmitted) successively on the wireless medium, separated from one another by an interframe space, xIFS. The interframe space xIFS may be chosen as larger than a SIFS. For example, the interframe space xIFS may be equal to a SIFS plus one or more slot times (a slot time is 9 µs in the 5 GHz band). The duration indicated in the MU-RTS trigger frame 1208 may be based on the transmission times of the multiple PPDUs, the intervening interframe spaces, and/or the transmission time of an ACK frame, for example, if required, from STA 1204.

The MU-RTS trigger frame 1208 may comprise a first association identifier (AID) subfield for STA 1204. The first AID subfield may solicit the first CTS frame 1210 from STA 1204. The MU-RTS trigger frame 1208 may comprise a first user info field for STA 1204 that may comprise the first AID subfield. The MU-RTS trigger frame 1208 may comprise a second AID subfield for STA 1206. The second AID subfield may solicit the second CTS frame 1212 from second STA 1206. The MU-RTS trigger frame 1208 may comprise a second user info for STA 1206 that may comprise the second AID subfield.

The MU-RTS trigger frame 1208 may comprise a subfield indicating that the solicited second CTS frame 1212 may be a pre-emptive CTS frame. The indication may inform STA 1204 that AP 1202 may pre-empt traffic intended for STA 1204 in order to send (e.g., transmit) pre-empting traffic to STA 1206 or another STA. The indication may inform STA 1206 that AP 1202 may send (e.g., transmit) pre-empting traffic to STA 1206 during the TXOP 1230.

The MU-RTS trigger frame 1208 may comprise a third AID subfield for a third STA. The MU-RTS trigger frame 1208 may solicit a third CTS frame from the third STA. The MU-RTS trigger frame 1208 comprises a respective AID subfield for each STA from which a pre-emptive CTS frame is solicited. Only those STAs having a respective AID subfield in the MU-RTS trigger frame 1208 may send (e.g., transmit) a pre-emptive CTS frame based on (e.g., in response to) the MU-RTS trigger frame 1208. The AP may control which STAs respond with pre-emptive CTS frames. The AP may select the STAs to respond to the MU-RTS trigger frame 1208, for example, based on a prioritization of traffic to the various STAs. For example, despite multiple STAs having traffic streams of the second category, the AP may choose to prioritize the transmission of pre-empting traffic to a first set of STAs over a second set of STAs.

STA 1204 and STA 1206 may respond to AP 1202 by sending (e.g., transmitting) respectively CTS frame 1210 and CTS frame 1212 to AP 1202, for example, based on receiving the MU-RTS trigger frame 1208. STA 1204 and STA 1206 may send (e.g., transmit) respectively CTS frame 1210 and CTS frame 1212, a SIFS period 1251 after receiving the MU-RTS trigger frame 1208. AP 1202 may begin sending (e.g., transmitting) one or more PPDUs comprising the first data to STA 1204. For example, AP 1202 may send (e.g., transmit) a PPDU 1214 comprising a first portion of the first data to STA 1204. AP 1202 may send (e.g., transmit) the PPDU 1214, an xIFS 1252 after receiving the CTS frame 1210 and/or the CTS frame 1212.

OBSS STAs exposed to AP 1202 1252 may receive the MU-RTS trigger frame 1208, for example, due to being within the communication range of AP 1202. As shown in FIG. 12, on receiving the MU-RTS trigger frame 1208, OBSS STAs exposed to AP 1202 1252 may set their respective NAVs (e.g., NAV 1241), for example, based on the duration field of the MU-RTS trigger frame 1208. The OBSS STAs exposed to AP 1202 1252 may not access the wireless medium for the duration of the TXOP 1230 that may be initiated by AP 1202.

OBSS STAs hidden from AP 1202 and exposed to STA 1204 1251 may not receive the MU-RTS trigger frame 1208 but receive the CTS frame 1210. As shown in FIG. 12, OBSS STAs hidden from AP 1202 and exposed to STA 1204 1251 may set their respective NAVs (e.g., NAV 1242), for example, based on the duration field of the CTS frame 1210. OBSS STAs hidden from AP 1202 and exposed to STA 1204 1251 may not access the wireless medium for the duration of the TXOP 1230 that may be initiated by AP 1202.

OBSS STAs hidden from both AP 1202 and STA 1204 1250 may receive neither the MU-RTS trigger frame 1208 nor the CTS frame 1210, for example, due to being outside the communication range of both AP 1202 and STA 1204. The OBSS STAs exposed to STA 1206 may hear the CTS frame 1212 and may set their respective NAVs based on the duration field of the CTS frame 1212. The OBSS STAs may not access the wireless medium for the duration of the TXOP 1230 that may be initiated by AP 1202. Any pre-empting PPDU sent (e.g., transmitted) to STA 1206 during the TXOP 1230 may be protected from OBSS interference. As described with respect to FIG. 12, AP 1202 may have second data arrive for transmission to STA 1206 1220, for example, while sending (e.g., transmitting) the PPDU 1214 to STA 1206. The second data may be low latency data that may require urgent transmission to STA 1206. AP 1202 may choose to pre-empt a subsequent one of the multiple PPDUs (comprising the first data) being sent (e.g., transmitted) to STA 1204, for example, to send (e.g., transmit) one or more PPDUs comprising the second data to STA 1206. For example, AP 1202 may pre-empt one or more PPDU to STA 1204 in order to send (e.g., transmit) the PPDU 1216 to STA 1206. The PPDU 1216 may be of the same size, shorter, or longer than the one or more pre-empted PPDUs. AP 1202 may send (e.g., transmit) PPDU 1216, an xIFS period 1253 after finishing sending (e.g., transmitting) the PPDU 1214.

STA 1206 may avoid OBSS interference, which may occur due to OBSS STAs that are hidden from both AP 1202 and STA 1204, for example, because the MU-RTS trigger frame 1208 pre-emptively solicited the CTS frame 1212 from STA 1206. STA 1206 may receive the PPDU 1216 successfully, in a timely manner, from AP 1202.

STA 1206 may acknowledge the PPDU 1216 by sending (e.g., transmitting) a BA frame 1218 to AP 1202. AP 1202 may resume transmission of the multiple PPDUs to STA 1204, for example, based on receiving the BA frame 1218. For example, AP 1202 may send (e.g., transmit) a PPDU 1220 comprising a second portion of the first data to STA 1204. AP 1202 may send (e.g., transmit) the PPDU 1220, an xIFS period 1255 after receiving the BA frame 1218 from STA 1206. The PPDU 1220 may correspond to a PPDU that was pre-empted to send (e.g., transmit) the PPDU 1216 or to another PPDU.

The operation described in FIG. 12 may be preceded by an exchange between AP 1202 and associated STAs of capability information elements indicating support of PPDU pre-emption. For example, AP 1202 may receive, from STA 1204 (and/or STA 1206), capability information element indicating that STA 1204 (and/or STA 1206) may support PPDU pre-emption (transmitting and/or receiving pre-empting PPDUs). For example, the capability information element may be received via an association request frame or a probe request frame. Support of PPDU pre-emption by STA 1204 (and/or STA 1206) may include support for processing and responding to an MU-RTS trigger frame that may solicit a pre-emptive CTS frame from STA 1204 (and/or STA 1206). AP 1202 may send (e.g., transmit) the MU-RTS trigger frame 1208 (soliciting a CTS frame from STA 1206), for example, based on STA 1206 supporting PPDU pre-emption.

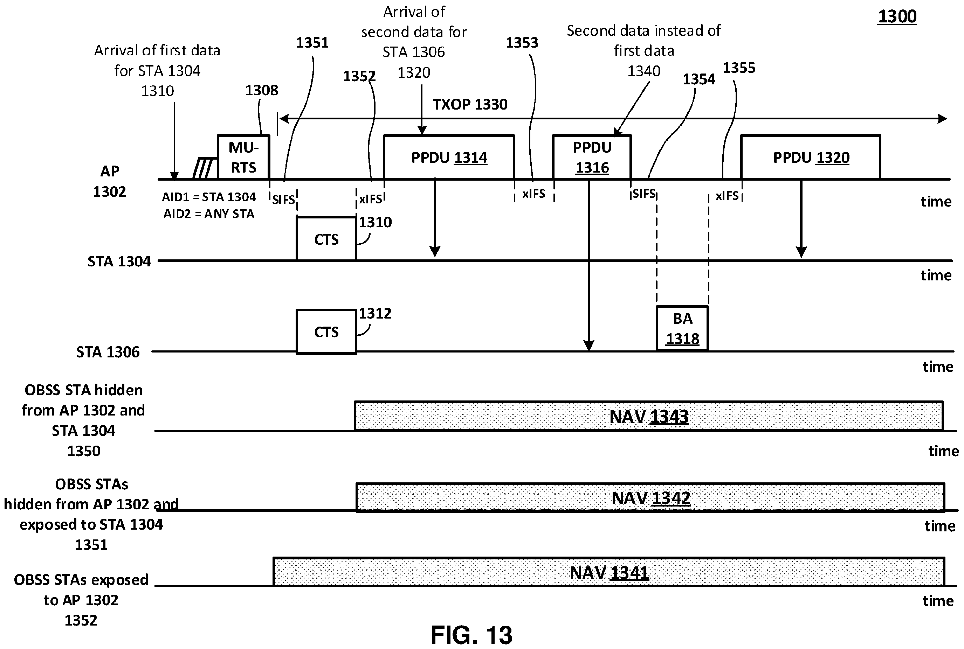

FIG. 13 shows an example pre-emptive protection of pre-empting traffic. As shown in FIG. 13, example 1300 may include an AP 1302, STA 1304, and STA 1306. STA 1304 and STA 1306 may be associated with the AP 1302. Additionally, example 1300 may include STAs of an OBSS relative to the BSS of the AP 1302 (OBSS STAs). The OBSS STAs, as shown in FIG. 13, may include STAs exposed to the AP 1302, STAs hidden from the AP 1302 and exposed to STA 1304, and STAs hidden from both the AP 1302 and STA 1304.

As shown in FIG. 13, example 1300 may begin with the arrival at AP 1302 of first data for transmission to STA 1304. The first data may be of a first category. The first category may be a non-low latency traffic category. AP 1302 may send (e.g., transmit) an MU-RTS trigger frame 1308 soliciting a first CTS frame 1310 from STA 1304 and one or more second CTS frames from one or more STAs other than STA 1304, for example, to send (e.g., transmit) (and protect the transmission of) the first data to STA 1304. AP 1302 may send (e.g., transmit) the MU-RTS trigger frame 1308, for example, based on the first data being of the first category. AP 1302 may send (e.g., transmit) the MU-RTS trigger frame 1308 that may solicit the one or more second CTS frames, for example, based on anticipating pre-empting second data for one or more STAs other than STA 1304. AP 1302 may solicit the one or more second CTS frames to protect the transmission (in one or more pre-empting PPDU) of second data that may arrive for one or more STAs other than STA 1304 during the transmission of the first data to STA 1304. The second data may be of a second category. The second category may be a low latency traffic category. The low latency traffic category may comprise one or more pre-determined traffic types (e.g., voice/video). The one or more pre-determined traffic types may be associated with one or more pre-determined TIDs. AP 1302 may send (e.g., transmit) the MU-RTS trigger frame 1308 that may solicit the one or more second CTS frames, for example, based on the first data being of the first category and based on anticipating second data of the second category for one or more STAs other than STA 1304. AP 1302 may anticipate arrival of pre-empting second data for one or more STAs other than STA 1304, for example, based on presence of one or more traffic stream of the second category at one or more STAs other than STA 1306. For example, AP 1302 may anticipate arrival of pre-empting second data for STA 1306 based on presence of a traffic stream of the second category at STA 1306. The presence of the traffic stream of the second category at STA 1306 may be signaled to AP 1302 in various frames, such as a restricted target wake time (R-TWT) setup request frame, an EHT stream classification service (SCS) request frame, etc.

The MU-RTS trigger frame 1308 may indicate a duration of a TXOP 1330 to send (e.g., transmit) the first data to STA 1304 (and including any intervening interframe spaces and/or the transmission time of an ACK frame, for example, if required). The first data may be sent (e.g., transmitted) using multiple PPDUs that are shorter than a pre-defined size (e.g., 2 milliseconds). The multiple PPDUs may be sent (e.g., transmitted) successively on the wireless medium, separated from one another by an interframe space, xIFS. The interframe space xIFS may be chosen as larger than a SIFS. For example, the interframe space xIFS may be equal to a SIFS plus one or more slot times (a slot time is 9 µs in the 5 GHz band). The duration indicated in the MU-RTS trigger frame 1308 may be based on the transmission times of the multiple PPDUs, the intervening interframe spaces, and/or the transmission time of an ACK frame, for example, if required, from STA 1304.

The MU-RTS trigger frame 1308 may comprise a first association identifier (AID) subfield for STA 1304. The first AID subfield may solicit the first CTS frame 1310 from STA 1304. The MU-RTS trigger frame 1308 may comprise a first user info field for STA 1304 that may comprise the first AID subfield. The MU-RTS trigger frame 1308 may comprise a second AID subfield that may not be associated with a particular STA. The second AID subfield may be set to a pre-determined value (e.g., 2044). The second AID subfield may solicit one or more second CTS frames from one or more STAs other than STA 1304. The second AID subfield may solicit a second CTS frame 1312 from any STA other than STA 1304 having a traffic stream of the second category. The second category may be a low latency traffic category. The MU-RTS trigger frame 1308 may comprise a second user info that may comprise the second AID subfield. Multiple STAs may be solicited using a single AID subfield. The signaling overhead of the MU-RTS trigger frame may be decreased significantly.

The MU-RTS trigger frame 1308 may comprise a subfield indicating that the solicited one or more second CTS frames are pre-emptive CTS frames. The indication may inform STA 1304 that AP 1302 may pre-empt traffic to STA 1304 in order to send (e.g., transmit) pre-empting traffic to one or more STAs other than STA 1304. The indication may inform one or more STAs other than STA 1304 that AP 1302 may send (e.g., transmit) pre-empting traffic to them during the TXOP 1330. Only those STAs (other than STA 1306) having a traffic stream of the second category may send (e.g., transmit) a pre-emptive CTS frame based on (e.g., in response to) the MU-RTS trigger frame 1308.

STA 1304 may respond to AP 1302 by sending (e.g., transmitting) a CTS frame 1310 to AP 1302, for example, based on receiving the MU-RTS trigger frame 1308. Based on receiving the MU-RTS trigger frame 1308, STA 1306 may determine that the MU-RTS trigger frame 1308 solicits pre-emptive CTS frames from STAs having a traffic stream of the second category. STA 1306 may make this determination based on the MU-RTS trigger frame 1308 comprising an AID subfield such as the second AID subfield described herein. STA 1306 may have a traffic stream of the second category. The second category may be a low latency traffic category. STA 1306 may respond to the MU-RTS trigger frame 1308 by sending (e.g., transmitting) a CTS frame 1312 to AP 1302.

STA 1304 and STA 1306 may send (e.g., transmit) respectively CTS frame 1310 and CTS frame 1312, a SIFS period 1351 after receiving the MU-RTS trigger frame 1308. AP 1302 may begin sending (e.g., transmitting) one or more PPDUs comprising the first data to STA 1304. For example, AP 1302 may send (e.g., transmit) a PPDU 1314 comprising a first portion of the first data to STA 1304. AP 1302 may send (e.g., transmit) the PPDU 1314, an xIFS period 1352 after receiving the CTS frame 1310 and/or the CTS frame 1312.

OBSS STAs exposed to AP 1302 1352 may receive the MU-RTS trigger frame 1308, for example, due to being within the communication range of AP 1302. As shown in FIG. 13, based on receiving the MU-RTS trigger frame 1308, OBSS STAs exposed to AP 1302 1352 may set their respective NAVs (e.g., NAV 1341) based on the duration field of the MU-RTS trigger frame 1308. The OBSS STAs exposed to AP 1302 1352 may not access the wireless medium for the duration of the TXOP 1330 that may be initiated by AP 1302.

OBSS STAs hidden from AP 1302 and exposed to STA 1304 1351 may not receive the MU-RTS trigger frame 1308 but receive the CTS frame 1310. As shown in FIG. 13, the OBSS STAs hidden from AP 1302 and exposed to STA 1304 1351 may set their respective NAVs based on the duration field of the CTS frame 1310. The OBSS STAs hidden from AP 1302 and exposed to STA 1304 1351 may not access the wireless medium for the duration of the TXOP 1330 that may be initiated by AP 1302.

OBSS STAs hidden from both AP 1302 and STA 1304 1350 may receive neither the MU-RTS trigger frame 1308 nor the CTS frame 1310, for example, due to being outside the communication range of both AP 1302 and STA 1304. OBSS STAs exposed to STA 1306 may hear the CTS frame 1312 and may set their respective NAVs based on the duration field of the CTS frame 1312. The OBSS STAs may not access the wireless medium for the duration of the TXOP 1330 initiated by AP 1302. Any pre-empting PPDU sent (e.g., transmitted) to STA 1306 during the TXOP 1330 may be protected from OBSS interference. For example, as shown in FIG. 13, AP 1302 may have second data arrive for transmission to STA 1306, for example, while sending (e.g., transmitting) PPDU 1314 to STA 1306. The second data may be low latency data that requires urgent transmission to STA 1306. AP 1302 may choose to pre-empt a subsequent one of the multiple PPDUs (comprising the first data) being sent (e.g., transmitted) to STA 1304, for example, to send (e.g., transmit) one or more PPDUs comprising the second data to STA 1306. For example, AP 1302 may pre-empt one or more PPDU to STA 1304 in order to send (e.g., transmit) the PPDU 1316 to STA 1306. The PPDU 1316 may be of the same size, shorter, or longer than the one or more pre-empted PPDUs. AP 1302 may send (e.g., transmit) the PPDU 1316, an xIFS period 1353 after finishing sending (e.g., transmitting) the PPDU 1314.

STA 1306 may avoid OBSS interference, which may occur due to OBSS STAs hidden from both AP 1302 and STA 1304, for example, because the MU-RTS trigger frame 1308 pre-emptively solicited the CTS frame 1312 from STA 1306. STA 1306 may receive the PPDU 1316 successfully, in a timely manner, from AP 1302.

STA 1306 may acknowledge the PPDU 1316 by sending (e.g., transmitting) a BA frame 1318 to AP 1302. AP 1302 may resume transmission of the multiple PPDUs to STA 1304, for example, based on receiving the BA frame 1318. For example, AP 1302 may send (e.g., transmit) a PPDU 1320 comprising a second portion of the first data to STA 1304. AP 1302 may send (e.g., transmit) the PPDU 1320, an xIFS period 1355 after receiving the BA frame 1318 from STA 1306. The PPDU 1320 may correspond to a PPDU pre-empted to send (e.g., transmit) the PPDU 1316 or to another PPDU.

The operation as described in FIG. 13 may be preceded by an exchange between AP 1302 and associated STAs of capability information elements indicating support of PPDU pre-emption (transmitting and/or receiving pre-empting PPDUs). For example, AP 1302 may receive from STA 1304 (and/or STA 1306) capability information element indicating that STA 1304 (and/or STA 1306) may support PPDU pre-emption. For example, the capability information element may be received via an association request frame or a probe request frame. Support of PPDU pre-emption by STA 1304 (and/or STA 1306) may include support for processing and responding to an MU-RTS trigger frame that may solicit a pre-emptive CTS frame from STA 1304 (and/or STA 1306). AP 1302 may send (e.g., transmit) the MU-RTS trigger frame 1308 (soliciting one or more second CTS frame from one or more STAs other than STA 1304) based on one or more STAs other than STA 1304 supporting PPDU pre-emption.

The operation as described in FIG. 12 or 13 may be preceded by a request-response procedure during which one or more STAs may request pre-emptive protection from the AP of pre-empting traffic to the one or more STAs. The request-response procedure may be used in addition to the exchange of capability information elements as described herein.

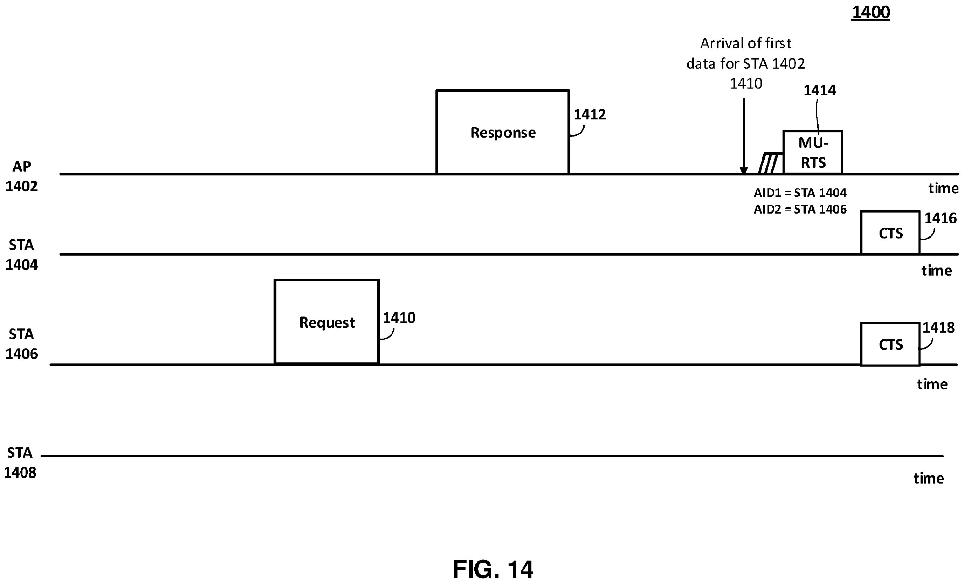

FIG. 14 shows an example request-response procedure. As shown in FIG. 14, example 1400 may include an AP 1402, STA 1404, STA1406, and STA 1408. STA 1404, STA1406, and STA 1408 may be associated with the AP 1402. STA 1406 may send (e.g., transmit), to AP 1402, a request frame 1410 requesting that AP 1402 solicit pre-emptive CTS frames from STA 1406. The request frame 1410 may comprise an action frame, a Quality of Service (QoS) data frame, and/or a QoS null frame. The request frame 1410 from STA 1406 may specify a time period during which STA 1406 may wish the traffic being pre-empted to it from AP 1402 to be protected. The request frame 1410 from STA 1406 may be based on STA 1406 having a traffic stream of a second category. The second category may comprise a low latency traffic category. STA 1406 may anticipate that traffic associated with the traffic stream may be received at AP 1402 during the time period. The request by STA 1406 may be based on another consideration, other than STA 1406 having a traffic stream of the second category.

As described with respect to FIG. 14, AP 1402 may accept the request frame 1410 of STA 1406 and may send (e.g., transmit), to STA 1406, a response frame 1412 indicating acceptance of the request of STA 1406. For example, the response frame 1412 may comprise an action frame or an ACK frame. First data for transmission to STA 1404 1410 may arrive at AP 1402. The first data may be of a first category. The first category may be a non-low latency traffic category. To send (e.g., transmit) (and protect the transmission of) the first data to STA 1404, and based on STA 1406 having requested pre-emptive protection, AP 1202 may send (e.g., transmit) an MU-RTS trigger frame 1414 soliciting a first CTS frame (e.g., CTS frame 1416) from STA 1404 and/or a second CTS frame (e.g., CTS frame 1418) from STA 1406. The MU-RTS trigger frame 1414 comprises a first AID subfield for STA 1404 and/or a second AID subfield for STA 1406. STA 1404 and STA 1406 may respond to the MU-RTS trigger frame 1414 by sending (e.g., transmitting) respectively the CTS frame 1416 and the CTS frame 1418.

AP 1402 may solicit pre-emptive CTS frames from an associated STA, for example, if the STA may have requested pre-emptive protection using the request-response procedure. As described with respect to FIG. 14, AP 1402 may include the second AID subfield for STA 1406 in the MU-RTS trigger frame 1414, for example, because STA 1406 requested pre-emptive protection before the transmission of the MU-RTS trigger frame 1414. AP 1402 may not include an AID subfield for STA 1408 in the MU-RTS trigger frame 1414, for example, because STA 1408 did not request pre-emptive protection before the transmission of MU-RTS trigger frame 1414.

AP 1402 may solicit pre-emptive CTS frames from an associated STA, for example, even if the STA has not requested pre-emptive protection using the request-response procedure. As described with respect to FIG. 14, AP 1402 may include an AID subfield for STA 1408 in the MU-RTS trigger frame 1414, for example, even if STA 1408 has not requested pre-emptive protection. The inclusion of an AID subfield for STA 1408 in the MU-RTS trigger frame 1414 may be based on the presence of a traffic stream of a second category at STA 1408. The second category may be a low latency traffic category. AP 1402 may include, in the MU-RTS trigger frame 1414, an AID subfield that may solicit a CTS frame from any STA other than STA 1404 having a traffic stream of the second category.

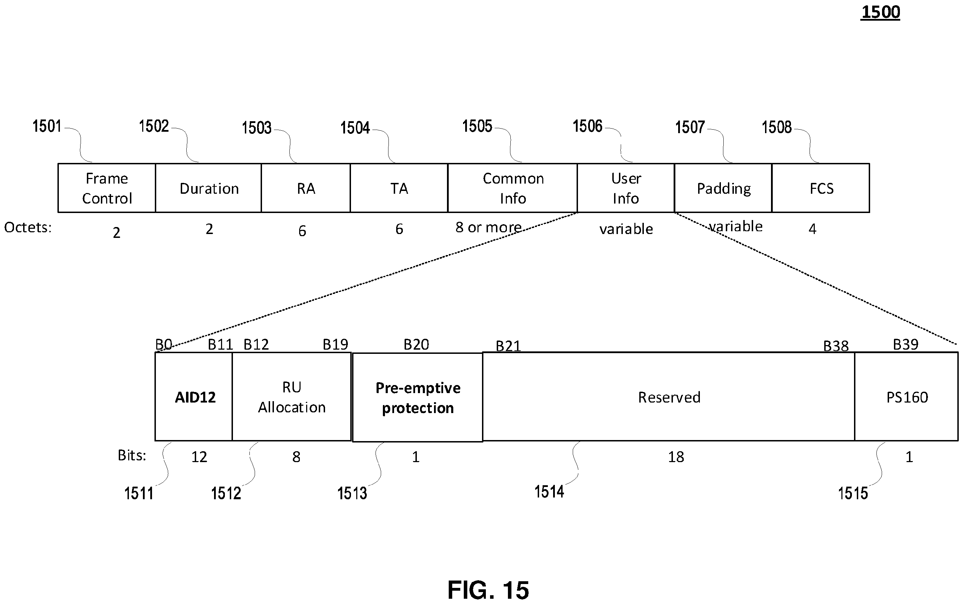

FIG. 15 shows an example MU-RTS trigger frame. A MU-RTS trigger frame 1500 may be a modified version of the MU-RTS trigger frame 800 described herein with respect to FIG. 8. As described herein, the MU-RTS trigger frame 1500 may include a plurality of user info fields (e.g., user info 1506). A first user info field of the plurality of user info fields may be for a first STA for which first data may be to be sent (e.g., transmitted). A second user info field of the plurality of user info fields may be for a second STA, or one or more STAs other than the first STA, to which pre-empting second data may be sent (e.g., transmitted) during a TXOP that may be initiated by the MU-RTS trigger frame 1500.

As shown in FIG. 15, a reserved bit (e.g., B20) of a user info field may be modified to carry a pre-emptive protection bit. The pre-emptive protection bit may be set to 0, for example, to indicate legacy behavior. For example, if the pre-emptive protection bit (e.g., B20) is set to 0, pre-emptive protection of pre-empting traffic may be disabled. For example, the pre-emptive protection bit (e.g., B20) may be set to 1 to indicate that pre-emptive protection of pre-empting traffic may be enabled. If pre-emptive protection is enabled, the pre-emptive protection bit may be set to 1 in each user info field of the MU-RTS trigger frame 1500.

As shown in FIG. 15, an AID12 subfield 1511 of the second user info field of the MU-RTS trigger frame 1500 may be set to a pre-determined value (e.g., 2044). The AID12 subfield 1511, for example, if set as such, may solicit one or more CTS frames from one or more STAs other than the first STA, whose AID may be indicated in the first user info field. The AID12 subfield 1511, for example, if set as such, may solicit a CTS frame from any STA, other than the first STA, that may have a traffic stream of the second category. The second category may be a low latency traffic category.

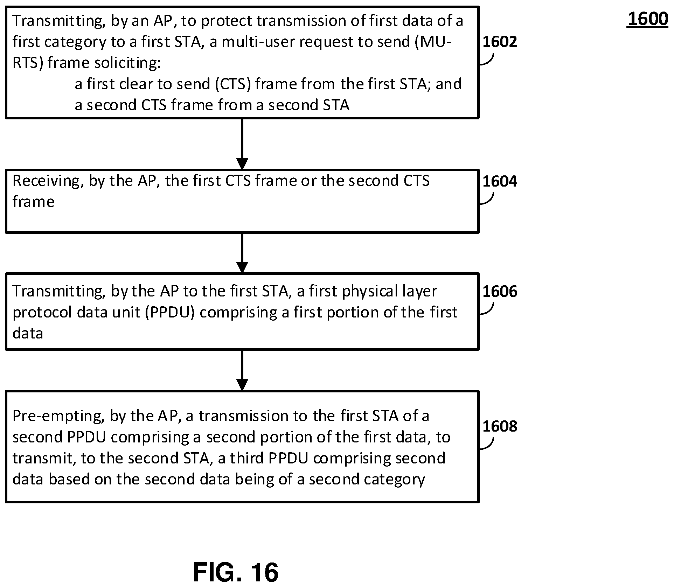

FIG. 16 shows an example pre-emptive protection method. Example process 1600 may be performed by an AP (e.g., such as AP 1202, AP 1302, or AP 1402). The AP may have first data available for transmission to a first STA. The first STA may be associated with the AP. The first data may be of a first category. The first category may comprise a non-low latency traffic category. The AP may have knowledge of presence of a traffic stream of a second category at a second STA. The second STA may be associated with the AP. The second category may comprise a low latency traffic category. As shown in FIG. 16, process 1600 may include steps 1602, 1604, 1606, and 1608.

At step 1602, the AP may send (e.g., transmit) an MU-RTS trigger frame that may solicit a first CTS frame from the first STA and/or a second CTS frame from the second STA, for example, to protect the transmission of the first data of the first category to the first STA. The sending (e.g., transmitting) of the MU-RTS trigger frame may be based on the first data being of the first category. The MU-RTS trigger frame may comprise a first AID subfield for the first STA and/or a second AID subfield for the second STA. The first AID subfield may solicit the first CTS frame from the first STA. The second AID may solicit the second CTS frame from the second STA.

The MU-RTS trigger frame may comprise a subfield indicating that the solicited second CTS frame may be a pre-emptive CTS. The subfield may inform the first STA that the AP may pre-empt traffic to the first STA in order to send (e.g., transmit) pre-empting traffic to the second STA or another STA. The indication may inform the second STA that the AP may send (e.g., transmit) pre-empting traffic to the second STA during a TXOP that may be initiated by the MU-RTS trigger frame.

The MU-RTS trigger frame may solicit a third CTS frame from a third STA. The third STA may be associated with the AP. The third STA may have a traffic stream of the second category. The MU-RTS may comprise a third AID subfield for the third STA. The third AID subfield may be a different subfield than the second AID subfield. The third AID subfield may be dedicated for the third STA. The third AID subfield may be the same as the second AID subfield. The second/third AID subfield may be a shared subfield for soliciting CTS frames from the second STA and/or the third STA.

At step 1604, the AP may receive the first CTS frame and/or the second CTS frame.

At step 1606, the AP may send (e.g., transmit), to the first STA, a first PPDU comprising a first portion of the first data. The first portion of the first data may comprise one or more MPDUs comprising a portion of the first data.

At step 1608, the AP may pre-empt a transmission to the first STA of a second PPDU comprising a second portion of the first data in order to send (e.g., transmit) to the second STA a third PPDU comprising second data, based on the second data being of the second category. A PPDU physical version identifier of the second PPDU may indicate that the second PPDU may comprise an ultra-high reliability (UHR) PPDU. At or before step 1606, the AP may receive the second data for transmission to the second STA.

The AP may receive, from the second STA, capability information element indicating that the second STA may support PPDU pre-emption. The capability information element may be received via an association request frame or a probe request frame. Sending (e.g., transmitting) of the MU-RTS trigger frame at step 1602 may be based on the second STA supporting PPDU pre-emption.

The AP may receive, from the second STA, a request frame requesting the AP to solicit the second CTS frame from the second STA in the MU-RTS trigger frame. The request frame may be an action frame, a QoS data frame, or a QoS null frame. Sending (e.g., transmitting) of the MU-RTS trigger frame at step 1602 may based on the AP receiving the request frame from the second STA.

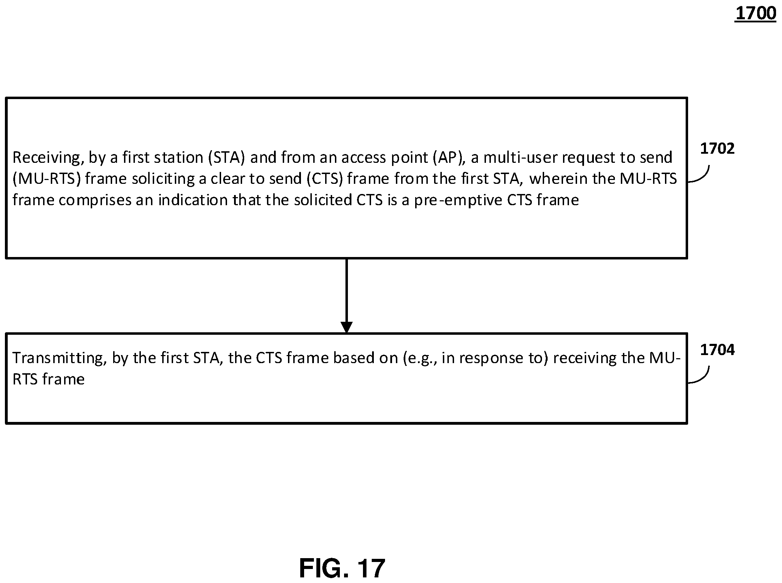

FIG. 17 shows an example multi-user Request-to-Send (MU-RTS)/Clear-to-Send (CTS) method. Example process 1700 may be performed by a first STA (e.g., such as STA 1206 or STA 1306). As shown in FIG. 17, process 1700 may comprise steps 1702 and 1704.

At step 1702, a first STA may receive, from an AP, an MU-RTS trigger frame soliciting a CTS frame from the first STA. The MU-RTS trigger frame may comprise an indication that the solicited CTS is a pre-emptive CTS frame. The indication may inform the first STA that the AP may send (e.g., transmit) pre-empting traffic to the first STA during a TXOP that may be initiated by the MU-RTS trigger frame. The MU-RTS trigger frame may comprise an AID subfield for the first STA. The MU-RTS trigger frame may comprise an AID subfield for soliciting pre-emptive CTS frames.

At step 1704, the first STA may send (e.g., transmit) the CTS frame based on (e.g., in response to) receiving the MU-RTS trigger frame. For example, after sending (e.g., transmitting) the CTS frame, the first STA may receive a first PPDU comprising a first portion of first data for a second STA. For example, the MU-RTS may solicit a CTS frame from the second STA. The first data may be of a first category. The first category may comprise a non-low latency traffic category.

After receiving the first PPDU, the first STA may receive, from the AP, a second PPDU comprising second data for the first STA. The second data may be of a second category. The second category may comprise a low latency traffic category. After receiving the second PPDU, the first STA receive, by from the AP, a third PPDU comprising a second portion of the first data for the second STA. The second PPDU may pre-empt the third PPDU based on arrival of the second data at the AP before transmission of the third PPDU by the AP. A PPDU physical version identifier of the third PPDU may indicate that the second PPDU may comprise a UHR PPDU.

The first STA may send (e.g., transmit), to the AP, capability information element indicating that the first STA may support PPDU pre-emption. The capability information element may be sent (e.g., transmitted) in an association request frame or a probe request frame. The receiving of the MU-RTS may be based on the first STA supporting PPDU pre-emption.

The first STA may send (e.g., transmit), to the AP, a request frame requesting the AP to solicit the CTS frame from the first STA in the MU-RTS trigger frame. The request frame may be an action frame, a QoS data frame, or a QoS null frame. The receiving of the MU-RTS trigger frame may be based on the first STA sending (e.g., transmitting) the request frame to the AP. The receiving of the MU-RTS trigger frame may be further based on the first data being of the first category.

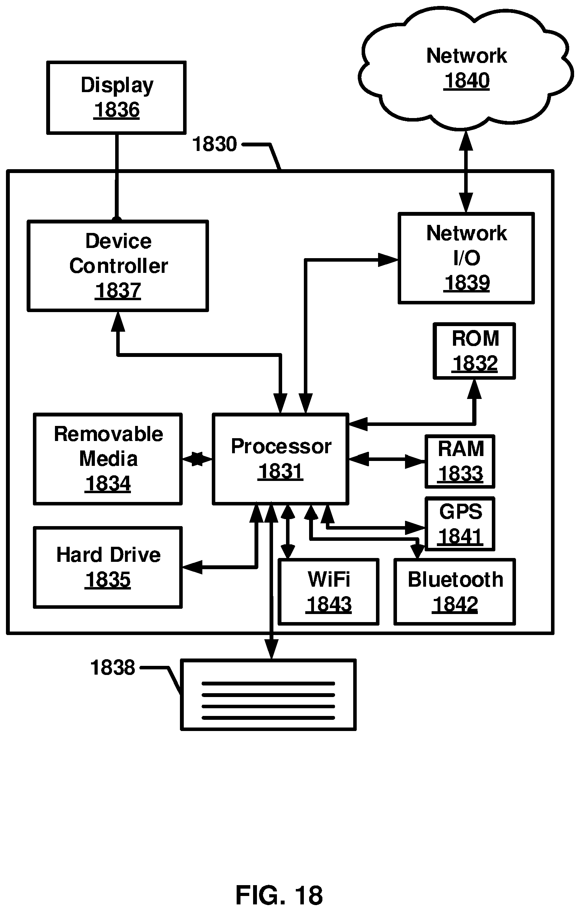

FIG. 18 shows example elements of a computing device that may be used to implement any of the various devices described herein, including, for example, a computing device (e.g., wireless device and/or STA) (e.g., 106-1, 106-2, 106-3, 106-4, 106-5, 106-6, 106-7, 106-8, 704, 706, 1004, 1006, 1304, 1306, 1308), an AP (e.g., 104-1, 104-2, 702, 1002, 1302), communication devices (e.g., 210, 260), and/or any computing and/or communication device described herein. The computing device 1830 may comprise one or more processors 1831, which may execute instructions stored in the random-access memory (RAM) 1833, the removable media 1834 (such as a Universal Serial Bus (USB) drive, compact disk (CD) or digital versatile disk (DVD), or floppy disk drive), or any other desired storage medium. Instructions may also be stored in an attached (or internal) hard drive 1835. The computing device 1830 may also comprise a security processor (not shown), which may execute instructions of one or more computer programs to monitor the processes executing on the processor 1831 and any process that requests access to any hardware and/or software components of the computing device 1830 (e.g., ROM 1832, RAM 1833, the removable media 1834, the hard drive 1835, the device controller 1837, a network interface 1839, a GPS 1841, a Bluetooth interface 1842, a WiFi interface 1843, etc.). The computing device 1830 may comprise one or more output devices, such as the display 1836 (e.g., a screen, a display device, a monitor, a television, etc.), and may comprise one or more output device controllers 1837, such as a video processor. There may also be one or more user input devices 1838, such as a remote control, keyboard, mouse, touch screen, microphone, etc. The computing device 1830 may also comprise one or more network interfaces, such as a network interface 1839, which may be a wired interface, a wireless interface, or a combination of the two. The network interface 1839 may provide an interface for the computing device 1830 to communicate with a network 1840 (e.g., a RAN, or any other network). The network interface 1839 may comprise a modem (e.g., a cable modem), and the external network 1840 may comprise communication links, an external network, an in-home network, a provider's wireless, coaxial, fiber, or hybrid fiber/coaxial distribution system (e.g., a DOCSIS network), or any other desired network. Additionally, the computing device 1830 may comprise a location-detecting device, such as a global positioning system (GPS) microprocessor 1841, which may be configured to receive and process global positioning signals and determine, with possible assistance from an external server and antenna, a geographic position of the computing device 1830.

The example in FIG. 18 may be a hardware configuration, although the components shown may be implemented as software as well. Modifications may be made to add, remove, combine, divide, etc. components of the computing device 1830 as desired. Additionally, the components may be implemented using basic computing devices and components, and the same components (e.g., processor 1831, ROM storage 1832, display 1836, etc.) may be used to implement any of the other computing devices and components described herein. For example, the various components described herein may be implemented using computing devices having components such as a processor executing computer-executable instructions stored on a computer-readable medium, as shown in FIG. 18. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising transmitting, by an access point, a multi-user request-to-send (MU-RTS) frame requesting one or more clear-to-send frames from at least: a first computing device; and a second computing device.

Clause 2. The method of clause 1, further comprising transmitting, to the first computing device and based on receiving a first clear-to-send frame from the first computing device, a first physical layer protocol data unit comprising a first portion of first data.

Clause 3. The method of any one of clauses 1 to 2, further comprising suspending, based on availability of second data, a transmission of a second physical layer protocol data unit to the first computing device,

Clause 4. The method of any one of clauses 1 to 3, wherein the second physical layer protocol data unit comprises a second portion of the first data.

Clause 5. The method of any one of clauses 1 to 4, further comprising transmitting, to the second computing device and based on receiving a second clear-to-send frame from the second computing device, a third physical layer protocol data unit comprising the second data.

Clause 6. A method comprising receiving, by an access point (AP), first data for transmission to a first computing device.

Clause 7. The method of clause 6, further comprising transmitting, based on the first data being of a first category, by the AP, a multi-user request to send (MU-RTS) trigger frame soliciting: a first clear to send (CTS) frame from the first computing device; and a second CTS frame from a second computing device.

Clause 8. The method of any one of clauses 6 to 7, further comprising receiving, by the AP, the first CTS frame or the second CTS frame;

Clause 9. The method of any one of clauses 6 to 8, further comprising transmitting, by the AP to the first computing device, a first physical layer protocol data unit (PPDU) comprising a first portion of the first data.

Clause 10. The method of any one of clauses 6 to 9, further comprising receiving, by the AP, during or before transmission of the first PPDU, second data for the second computing device.

Clause 11. The method of any one of clauses 6 to 10, further comprising, based on the second data being of a second category, pre-empting a transmission to the first computing device of a second PPDU comprising a second portion of the first data; and transmitting, to the second computing device, a third PPDU comprising the second data.

Clause 12. The method of any one of clauses 1 to 11, further comprising receiving, from the second computing device, a request frame, wherein the request frame indicates that the access point is to request the second clear-to-send frame from the second computing device in the multi-user request-to-send frame.

Clause 13. The method of any one of clauses 1 to 12, wherein the multi-user request-to-send frame comprises a first association identifier subfield associated with the first computing device and a second association identifier subfield associated with the second computing device.

Clause 14. The method of any one of clauses 1 to 13, wherein a first association identifier subfield comprised in the multi-user request-to-send frame indicates a request, by the access point and to the first computing device, to transmit the first clear-to-send frame.

Clause 15. The method of any one of clauses 1 to 14, wherein a second association identifier comprised in the multi-user request-to-send frame indicates a request, by the access point and to the second computing device, to transmit the second clear-to-send frame.

Clause 16. The method of any one of clauses 1 to 15, wherein the multi-user request-to-send frame comprises a subfield indicating that the requested second clear-to-send frame is a pre-emptive clear-to-send frame.

Clause 17. The method of any one of clauses 1 to 16, wherein the multi-user request-to-send frame indicates a request for a third clear-to-send frame from a third computing device.

Clause 18. The method of any one of clauses 1 to 17, wherein the multi-user request-to-send comprises a third association identifier subfield associated with a third computing device.

Clause 19. The method of any one of clauses 1 to 18 further comprising receiving, from the second computing device, capability information indicating that the second computing device supports physical layer protocol data unit pre-emption.

Clause 20. The method of any one of clauses 1 to 19, wherein the transmitting the multi-user request-to-send is based on whether the second computing device supports physical layer protocol data unit pre-emption.

Clause 21. The method of any one of clauses 1 to 20 further comprising receiving, from the second computing device and via an association request frame or a probe request frame, capability information indicating that the second computing device supports physical layer protocol data unit pre-emption.

Clause 22. The method of any one of clauses 1 to 21, wherein the second data is based on a low latency traffic category.

Clause 23. The method of any one of clauses 1 to 22, wherein the third association identifier subfield is the second association identifier subfield.

Clause 24. The method of any one of clauses 1 to 23, wherein the third association identifier subfield is a different subfield than the second association identifier subfield.

Clause 25. The method of any one of clauses 1 to 24, wherein the transmitting of the MU-RTS is based on whether the AP receives the request frame from the second computing device.

Clause 26. The method of any one of clauses 1 to 25, wherein the request frame is an action frame, a quality of service (QoS) data frame, or a QoS null frame.

Clause 27. The method of any one of clauses 1 to 26, wherein the transmitting of the MU-RTS trigger frame is further based on the first data being of the first category.

Clause 28. The method of any one of clauses 1 to 27, wherein the first category comprises a non-low latency traffic category.

Clause 29. The method of any one of clauses 1 to 28, wherein the second category comprises a low latency traffic category.

Clause 30. The method of any one of clauses 1 to 29, wherein a physical layer protocol data unit physical version identifier of the second physical layer protocol data unit indicates that the second physical layer protocol data unit comprises an ultra-high reliability (UHR) physical layer protocol data unit.

Clause 31. A computing device comprising one or more processors and memory storing instructions that, when executed by the one or more processors, cause the computing device to perform the method of any one of clauses 1 to 30.

Clause 32. A system comprising: an access point device configured to perform the method of any one of clauses 1 to 30, and at least one computing device configured to send at least one clear-to-send message.

Clause 33. A computer-readable medium storing instructions that, when executed, cause performance of the method any one of clauses 1 to 30.

Clause 34. A method comprising receiving, by an access point and from a second computing device, a request frame, wherein the request frame indicates that the access point is to request a second clear-to-send frame from the second computing device.

Clause 35. The method of clause 34, further comprising transmitting a multi-user request-to-send frame requesting, from the second computing device, the second clear-to-send frame.

Clause 36. The method of any one of clauses 34 to 35, further comprising receiving, during or before transmission of first data for a first computing device, second data for the second computing device.

Clause 37. The method of any one of clauses 34 to 36, further comprising transmitting, to the second computing device and based on a reception of the second clear-to-send frame, the second data.

Clause 38. The method of any one of clauses 34 to 37, wherein the transmitting of the multi-user request-to-send frame is based on whether the access point receives the request frame from the second computing device.

Clause 39. The method of any one of clauses 34 to 38, wherein the multi-user request-to-send frame comprises a subfield indicating that the requested second clear-to-send frame is a pre-emptive clear-to-send frame.

Clause 40. The method of any one of clauses 34 to 39, further comprising receiving, from the second computing device, capability information indicating that the second computing device supports physical layer protocol data unit pre-emption.

Clause 41. A computing device comprising one or more processors and memory storing instructions that, when executed by the one or more processors, cause the computing device to perform the method of any one of clauses 34 to 40.

Clause 42. A system comprising: an access point device configured to perform the method of any one of clauses 34 to 40, and at least one computing device configured to send at least one clear-to-send message.

Clause 43. A computer-readable medium storing instructions that, when executed, cause performance of the method any one of clauses 34 to 40.

Clause 44. A method comprising: receiving, by a first computing device and from an access point, a multi-user request-to-send frame requesting a clear-to-send frame from the first computing device,

Clause 45. The method of clause 44, wherein the multi-user request-to-send frame indicates that the requested clear-to-send is a pre-emptive clear-to-send frame; and

Clause 46. The method of any one of clauses 44 to 45, further comprising transmitting, to the access point and based on the multi-user request-to-send frame, the requested clear-to-send frame.

Clause 47. The method of any one of clauses 44 to 46, further comprising receiving, from the access point and after transmitting the requested clear-to-send frame, a first physical layer protocol data unit comprising a first portion of first data for a second computing device.

Clause 48. The method of any one of clauses 44 to 47, wherein the multi-user request-to-send frame indicates a request, by the access point and to a second computing device, to transmit a second clear-to-send frame.

Clause 49. The method of any one of clauses 44 to 48, further comprising receiving, from the access point and after receiving a first physical layer protocol data unit, a second physical layer protocol data unit comprising second data for the first computing device.

Clause 50. The method of any one of clauses 44 to 49, further comprising receiving, by the first computing device from the access point, after receiving the second PPDU, a third PPDU comprising a second portion of the first data for the second computing device.

Clause 51. The method of any one of clauses 44 to 50, wherein the second PPDU preempts the third PPDU based on arrival of the second data at the access point before transmission of the third PPDU by the access point.

Clause 52. The method of any one of clauses 44 to 51, wherein the MU-RTS trigger frame comprises an association identifier subfield for the first computing device.

Clause 53. The method of any one of clauses 44 to 52, wherein the MU-RTS trigger frame comprises an association identifier subfield for soliciting pre-emptive CTS frames.

Clause 54. The method of any one of clauses 44 to 53, further comprising transmitting, by first computing device to the access point, a capability information element indicating that the first computing device supports PPDU pre-emption.

Clause 55. The method of any one of clauses 44 to 54, wherein the receiving of the MU-RTS is based on whether the first computing device supports PPDU pre-emption.

Clause 56. The method of any one of clauses 44 to 55, further comprising transmitting the capability information element in an association request frame or a probe request frame.

Clause 57. The method of any one of clauses 44 to 56, further comprising transmitting, by first computing device to the access point, a request frame requesting the access point to solicit the CTS frame from the first computing device in the MU-RTS trigger frame.

Clause 58. The method of any one of clauses 44 to 57, wherein the receiving of the MU-RTS trigger frame is based on whether the first computing device transmits the request frame to the access point.

Clause 59. The method of any one of clauses 44 to 58, wherein the request frame is an action frame, a quality of service (QoS) data frame, or a QoS null frame.

Clause 60. The method of any one of clauses 44 to 59, wherein the receiving of the MU-RTS trigger frame is further based on the first data being of a first category.

Clause 61. The method of any one of clauses 44 to 60, wherein the first traffic category comprises a non-low latency traffic category.

Clause 62. The method of any one of clauses 44 to 61, wherein the second data is of a second category.

Clause 63. The method of any one of clauses 44 to 62, wherein the second category comprises a low latency traffic category.

Clause 64. The method of any one of clauses 44 to 63, wherein a PPDU physical version identifier of the second PPDU indicates that the second PPDU comprises an ultra-high reliability (UHR) PPDU.

Clause 65. A computing device comprising one or more processors and memory storing instructions that, when executed by the one or more processors, cause the computing device to perform the method of any one of clauses 44 to 64.

Clause 66. A system comprising: an access point device configured to perform the method of any one of clauses 44 to 64, and at least one computing device configured to send at least one clear-to-send message.

Clause 67. A computer-readable medium storing instructions that, when executed, cause performance of the method any one of clauses 44 to 64.

An access point may perform a method comprising multiple operations. The access point may send (e.g., transmit) a multi-user request-to-send frame requesting one or more clear-to-send frames from at least: a first computing device; and a second computing device. The access point may send (e.g., transmit), to the first computing device, a first physical layer protocol data unit comprising a first portion of first data, for example, based on receiving a first clear-to-send frame from the first computing device. The access point may suspend, for example, based on availability of second data, a transmission of a second physical layer protocol data unit to the first computing device. The second physical layer protocol data unit may comprise a second portion of the first data. The access point may send (e.g., transmit), to the second computing device, a third physical layer protocol data unit comprising the second data, for example, based on receiving a second clear-to-send frame from the second computing device. The access point may receive first data for transmission to a first computing device. The access point may send (e.g., transmit), for example, based on the first data being of a first category, a multi-user request to send (MU-RTS) trigger frame soliciting: a first clear to send (CTS) frame from the first computing device; and a second CTS frame from a second computing device. The access point may send (e.g., transmit) the first CTS frame or the second CTS frame. The access point may send (e.g., transmit), to the first computing device, a first physical layer protocol data unit (PPDU) comprising a first portion of the first data. The access point may send (e.g., transmit), during or before transmission of the first PPDU, second data for the second computing device. The access point may, based on the second data being of a second category, pre-empt a transmission to the first computing device of a second PPDU comprising a second portion of the first data. The access point may, based on the second data being of a second category, send (e.g., transmit), to the second computing device, a third PPDU comprising the second data. The access point may receive, from the second computing device, a request frame that may indicate that the access point is to request the second clear-to-send frame from the second computing device in the multi-user request-to-send frame. The multi-user request-to-send frame may comprise a first association identifier subfield associated with the first computing device and/or a second association identifier subfield associated with the second computing device. A first association identifier subfield comprised in the multi-user request-to-send frame may indicate a request, by the access point and to the first computing device, to send (e.g., transmit) the first clear-to-send frame. A second association identifier comprised in the multi-user request-to-send frame may indicate a request, by the access point and to the second computing device, to send (e.g., transmit) the second clear-to-send frame. The multi-user request-to-send frame may comprise a subfield indicating that the requested second clear-to-send frame is a pre-emptive clear-to-send frame. The multi-user request-to-send frame may indicate a request for a third clear-to-send frame from a third computing device. The multi-user request-to-send may comprise a third association identifier subfield associated with a third computing device. The access point may receive, from the second computing device, capability information indicating that the second computing device supports physical layer protocol data unit pre-emption. The transmitting the multi-user request-to-send may be based on whether the second computing device supports physical layer protocol data unit pre-emption. The access point may receive, from the second computing device and via an association request frame or a probe request frame, capability information indicating that the second computing device supports physical layer protocol data unit pre-emption. The second data may be based on a low latency traffic category. The third association identifier subfield may be the second association identifier subfield. The third association identifier subfield may be a different subfield than the second association identifier subfield. The transmitting of the multi-user request-to-send may be based on whether the AP receives the request frame from the second computing device. The request frame may be an action frame, a quality of service (QoS) data frame, or a QoS null frame. The transmitting of the MU-RTS trigger frame may be further based on the first data being of the first category. The first category may comprise a non-low latency traffic category. The second category may comprise a low latency traffic category. A PPDU physical version identifier of the second PPDU may indicate that the second PPDU comprises an ultra-high reliability (UHR) PPDU. The access point may comprise one or more processors; and memory storing instructions that, when executed by the one or more processors, cause the computing device to perform the described method, additional operations and/or include the additional elements. A system may comprise an access point configured to perform the described method, additional operations and/or include the additional elements; and at least one computing device configured to send at least one clear-to-send message. A computer-readable medium may store instructions that, when executed, cause performance of the described method, additional operations and/or include the additional elements.

An access point may perform a method comprising multiple operations. The access point may receive, from a second computing device, a request frame that may indicate that the access point is to request a second clear-to-send frame from the second computing device. The access point may send (transmit) a multi-user request-to-send frame requesting, from the second computing device, the second clear-to-send frame. The access point may receive, during or before transmission of first data for a first computing device, second data for the second computing device. The access point may send (transmit), to the second computing device, for example, based on a reception of the second clear-to-send frame, the second data. The transmitting of the multi-user request-to-send frame may be based on whether the access point receives the request frame from the second computing device. The multi-user request-to-send frame may comprise a subfield indicating that the requested second clear-to-send frame is a pre-emptive clear-to-send frame. The access point may receive, from the second computing device, capability information indicating that the second computing device supports physical layer protocol data unit pre-emption. The access point may comprise one or more processors; and memory storing instructions that, when executed by the one or more processors, cause the computing device to perform the described method, additional operations and/or include the additional elements. A system may comprise an access point configured to perform the described method, additional operations and/or include the additional elements; and at least one computing device configured to send at least one clear-to-send message. A computer-readable medium may store instructions that, when executed, cause performance of the described method, additional operations and/or include the additional elements.

A computing device may perform a method comprising multiple operations. A first computing device may receive, from an access point, a multi-user request-to-send frame requesting a clear-to-send frame from the first computing device. The multi-user request-to-send frame may indicate that the requested clear-to-send is a pre-emptive clear-to-send frame. The first computing device may send (e.g., transmit), to the access point, for example, based on the multi-user request-to-send frame, the requested clear-to-send frame. The first computing device may receive, from the access point and after sending (e.g., transmitting) the requested clear-to-send frame, a first physical layer protocol data unit comprising a first portion of first data for a second computing device. The multi-user request-to-send frame may indicate a request, by the access point and to a second computing device, to transmit a second clear-to-send frame. The first computing device may, from the access point and after receiving a first physical layer protocol data unit, a second physical layer protocol data unit comprising second data for the first computing device. The first computing device may receive, from the access point, after receiving the second PPDU, a third PPDU comprising a second portion of the first data for the second computing device. The second PPDU may pre-empt the third PPDU based on arrival of the second data at the access point before transmission of the third PPDU by the access point. The MU-RTS trigger frame may comprise an association identifier subfield for the first computing device. The MU-RTS trigger frame may comprise an association identifier subfield for soliciting pre-emptive CTS frames. The first computing device may send (e.g., transmit), to the access point, capability information element indicating that the first computing device supports PPDU pre-emption. The receiving of the MU-RTS may be based on whether the first computing device supports PPDU pre-emption. The first computing device may send (e.g., transmit) the capability information element in an association request frame or a probe request frame. The first computing device may send (e.g., transmit), to the access point, a request frame requesting the access point to solicit the CTS frame from the first computing device in the MU-RTS trigger frame. The receiving of the MU-RTS trigger frame may be based on whether the first computing device transmits the request frame to the AP. The request frame may be an action frame, a quality of service (QoS) data frame, or a QoS null frame. The receiving of the MU-RTS trigger frame may be further based on the first data being of a first category. The first traffic category may comprise a non-low latency traffic category. The second data may be of a second category. The second category may comprise a low latency traffic category. A PPDU physical version identifier of the second PPDU may indicate that the second PPDU comprises an ultra-high reliability (UHR) PPDU. The access point may comprise one or more processors; and memory storing instructions that, when executed by the one or more processors, cause the computing device to perform the described method, additional operations and/or include the additional elements. A system may comprise an access point configured to perform the described method, additional operations and/or include the additional elements; and at least one computing device configured to send at least one clear-to-send message. A computer-readable medium may store instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.1 1be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
transmitting, by an access point, a multi-user request-to-send frame requesting one or more clear-to-send frames from at least:
a first computing device; and
a second computing device;
transmitting, to the first computing device and based on receiving a first clear-to-send frame from the first computing device, a first physical layer protocol data unit comprising a first portion of first data;
suspending, based on availability of second data, a transmission of a second physical layer protocol data unit to the first computing device, wherein the second physical layer protocol data unit comprises a second portion of the first data; and
transmitting, to the second computing device and based on receiving a second clear-to-send frame from the second computing device, a third physical layer protocol data unit comprising the second data.

2. The method of claim 1, further comprising receiving, from the second computing device, a request frame, wherein the request frame indicates that the access point is to request the second clear-to-send frame from the second computing device in the multi-user request-to-send frame.

3. The method of any one of claims 1 to 2, wherein the multi-user request-to-send frame comprises a first association identifier subfield associated with the first computing device and a second association identifier subfield associated with the second computing device.

4. The method of any one of claims 1 to 3, wherein a first association identifier subfield comprised in the multi-user request-to-send frame indicates a request, by the access point and to the first computing device, to transmit the first clear-to-send frame.

5. The method of any one of claims 1 to 4, wherein a second association identifier comprised in the multi-user request-to-send frame indicates a request, by the access point and to the second computing device, to transmit the second clear-to-send frame.

6. The method of any one of claims 1 to 5, wherein the multi-user request-to-send frame comprises a subfield indicating that the requested second clear-to-send frame is a pre-emptive clear-to-send frame.

7. The method of any one of claims 1 to 6, wherein the multi-user request-to-send frame indicates a request for a third clear-to-send frame from a third computing device.

8. The method of any one of claims 1 to 7, wherein the multi-user request-to-send comprises a third association identifier subfield associated with a third computing device.

9. The method of any one of claims 1 to 8, further comprising receiving, from the second computing device, capability information indicating that the second computing device supports physical layer protocol data unit pre-emption.

10. The method of any one of claims 1 to 9, wherein the transmitting the multi-user request-to-send is based on whether the second computing device supports physical layer protocol data unit pre-emption.

11. The method of any one of claims 1 to 10, further comprising receiving, from the second computing device and via an association request frame or a probe request frame, capability information indicating that the second computing device supports physical layer protocol data unit pre-emption.

12. The method of any one of claims 1 to 11, wherein the second data is based on a low latency traffic category.

13. A computing device comprising:
one or more processors; and
memory storing instructions that, when executed by the one or more processors, cause the computing device to perform the method of any one of claims 1 to 12.

14. A system comprising:
an access point configured to perform the method of any one of claims 1 to 12; and
at least one computing device configured to send the at least one clear-to-send message.

15. A computer-readable medium storing instructions that, when executed, cause performance of the method of any one of claims 1 to 12.
